(19) Europäisches Patentamt / European Patent Office / Office européen des brevets

(11) **EP 3 888 908 B1**

(12) **EUROPEAN PATENT SPECIFICATION**

(45) Date of publication and mention of the grant of the patent:
**15.11.2023 Bulletin 2023/46**

(21) Application number: **19890170.4**

(22) Date of filing: **29.11.2019**

(51) International Patent Classification (IPC):
**B32B 7/12** *(2006.01)*     **B32B 27/08** *(2006.01)*
**C08G 18/10** *(2006.01)*     **C09J 175/06** *(2006.01)*

(52) Cooperative Patent Classification (CPC):
(C-Sets available)
**C08G 18/755; B32B 7/02; B32B 7/06; B32B 7/12;
B32B 15/043; B32B 15/08; B32B 15/082;
B32B 15/085; B32B 15/088; B32B 15/09;
B32B 15/12; B32B 15/20; B32B 23/042;
B32B 23/06; B32B 23/08;**     (Cont.)

(86) International application number:
**PCT/JP2019/046761**

(87) International publication number:
**WO 2020/111226 (04.06.2020 Gazette 2020/23)**

(54) **ADHESIVE, PACKAGING MATERIAL, PACKAGING CONTAINER, AND PRODUCTION METHOD FOR RECYCLED SUBSTRATE**

KLEBSTOFF, VERPACKUNGSMATERIAL, VERPACKUNGSBEHÄLTER UND HERSTELLUNGSVERFAHREN FÜR WIEDERVERWERTETES SUBSTRAT

ADHÉSIF, MATÉRIAU D'EMBALLAGE, CONTENANT D'EMBALLAGE ET PROCÉDÉ DE PRODUCTION POUR SUBSTRAT RECYCLÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2018 JP 2018225007
31.10.2019 JP 2019198985
25.11.2019 JP 2019212520**

(43) Date of publication of application:
**06.10.2021 Bulletin 2021/40**

(73) Proprietors:
• **Toyo Ink SC Holdings Co., Ltd.**
**Tokyo 104-8377 (JP)**
• **Toyo-Morton, Ltd.**
**Chuo-ku**
**Tokyo 1040031 (JP)**

(72) Inventors:
• **MONDEN, Masahisa**
**Tokyo 104-0031 (JP)**

• **SHIRAISHI, Koki**
**Tokyo 104-0031 (JP)**
• **SOMEDA, Tadashi**
**Tokyo 104-0031 (JP)**
• **USA, Yuki**
**Tokyo 104-0031 (JP)**

(74) Representative: **SSM Sandmair
Patentanwälte Rechtsanwalt
Partnerschaft mbB
Joseph-Wild-Straße 20
81829 München (DE)**

(56) References cited:
**EP-A1- 3 381 994     WO-A1-2012/173182
WO-A1-2012/173182     WO-A1-2017/110780
JP-A- H05 339 557     JP-A- 2001 207 151
JP-A- 2001 261 746     JP-A- 2001 261 746
JP-A- 2012 501 829     JP-A- 2016 037 508
JP-A- 2016 037 508**

(52)  Cooperative Patent Classification (CPC): (Cont.)
**B32B 27/08; B32B 27/10; B32B 27/28;**
**B32B 27/302; B32B 27/304; B32B 27/306;**
**B32B 27/308; B32B 27/32; B32B 27/34;**
**B32B 27/36; B32B 27/365; B32B 29/005;**
**C08G 18/0823; C08G 18/10; C08G 18/348;**
**C08G 18/4216; C08G 18/4615; C08G 18/4825;**
**C08G 18/6692; C08G 18/73; C08G 18/7621;**
**C08G 18/7642; C08G 18/7671; C09J 175/06;**
B32B 2250/02; B32B 2250/03; B32B 2250/24;
B32B 2255/10; B32B 2255/20; B32B 2255/26;
B32B 2255/28; B32B 2270/00; B32B 2272/00;
B32B 2307/31; B32B 2307/4023; B32B 2307/412;
B32B 2307/514; B32B 2307/518; B32B 2307/7166;
B32B 2307/7244; B32B 2307/732; B32B 2307/734;
B32B 2307/748; B32B 2307/75; B32B 2405/00;
B32B 2439/06; B32B 2439/46; B32B 2439/70;
B32B 2439/80; B32B 2553/00; Y02P 20/582

C-Sets
**C08G 18/10, C08G 18/73;**
**C08G 18/10, C08G 18/755;**
**C08G 18/10, C08G 18/7621;**
**C08G 18/10, C08G 18/7642;**
**C08G 18/10, C08G 18/7671**

**Description**

Technical Field

The present invention relates to an adhesive, a laminate, a packaging material, and a packaging container, as well as a method for recycling a substrate and a method for producing a recycled substrate.

Background Art

In recent years, packages, plastic bottles, and other plastic products made from plastic film materials have been disposed and dumped as garbage into the ocean, causing environmental pollution problems. These plastic products are degraded in seawater into submicron-sized debris (microplastics), and they float in seawater. If marine organisms, such as fish, ingest such plastic products, they get concentrated within those marine organisms, causing concerns that they might affect the health of seabirds and humans who consume such marine organisms as food. In addition, chemicals etc. originating from inks, adhesives, coating layers, and the like are also attached to the surface of microplastics generated from the packages, which cause more concerns on environmental conservation. In order to overcome these problems, various efforts to reduce microplastics have been beginning.

The plastic products above mainly include food packages and the like using plastic substrates. In those packages, various types of plastic substrates such as a polyester (PET) substrate, a nylon (NY) substrate, and a polypropylene (PP) substrate are used as film substrates. These plastic substrates are provided with a printed layer with gravure ink, flexographic ink, or other printing ink, and further adhered to a hot-melt resin substrate via an adhesive or the like to form a laminate, and the laminate is then cut and heat-sealed to form a package.

Examples of the attempts to reduce the microplastics include: (1) a method of replacing the plastic substrate in the package with "paper", which is made from wood material, a renewable resource; (2) a method of using a mono-material (polyolefin) plastic substrate in the package and recycling the plastic substrate; and (3) a method of removing the impurities in the package and recycling the plastic substrate.

The method (1) above is promising in terms of safety and recyclability but it is in many aspects inferior to the conventional plastic substrates in terms of performance, such as in gas and water vapor barrier properties and water resistance.

For the method (2) above, techniques are being developed to overcome the shortcomings of polyolefins by functional coating agents, such as a barrier coating agent, but such a material is inferior to the conventional plastic substrates in terms of performance, such as in suitability for retort pouch and in light-shielding properties, and thus the replacement by a polyolefin is not easy. Furthermore, the inks, functional coating agents, adhesives, and the like between the polyolefin substrates will become impurities in recycling the polyolefins which is also a problem.

For the method (3) above, attempts have been made to remove the printed layer on the outer surface of the package, which would become an impurity in the recycling process, by using an aqueous alkali solution.

For example, Reference Document 1 discloses that, in relation to the adhesives used for labels and other attached items, an adhesive containing a copolymer comprising the units of a lower alkyl ester of acrylic acid and/or maleic acid can be removed with alkaline water. Also, in relation to the adhesives used in adhesive tapes, Patent Document 2 discloses an adhesive tape having excellent alkali peelability comprising a natural rubber and a high acid number tackifier. Reference Document 3 discloses a technique in which a primer layer consisting of an acrylic-based resin or a styrene-maleic-based resin is provided on a plastic substrate, and a printed layer, which is disposed on the primer layer, is removed with alkaline water. In addition, Patent Document 4 discloses a technique in which an ink containing as a binder resin a polyurethane or acrylic resin having an acidic group is printed and the printed layer is similarly removed with alkaline water. However, these techniques only remove the surface-printed inks on the outside of the package and they have not been successful in detaching the sealant substrates and other substrates in the laminates.

It would be an industrially useful, important technology for promoting the recycling of the plastics and contributing to the environmental conservation, if the technology could allow detachment of the sealant substrate and the other substrates in order to recycle the sealant substrate (which is especially thick and occupies a large proportion of the packaging material as a whole) from the packaging materials, wherein the packaging materials are formed by using an adhesive to laminate the sealant substrate and a substrate comprising a plastic layer and a print layer, such as a pattern layer. However, no packaging material has been reported so far that comprises an adhesive layer satisfying both the required performance for a laminate adhesive and the function of allowing detachment of the sealant substrate and the other substrates.

Citation List

Patent Documents

Patent Document 1: JP H11-323280 A
Patent Document 2: JP 2017-145327 A
Patent Document 3: JP 2001-131484 A
Patent Document 4: JP H11-209677 A

JP 2001 261746 A discloses a method for recycling an article which can be a laminated material comprising an inner adhesive layer and a print layer whereby the adhesive layer is dissolved in an alkaline solution and comprises an aliphatic polyisocyanate. The article can be a packaging film. The adhesive coating has an acid value of 8-250 mg KOH/g.
JP 2016 037508 A discloses packaging bags comprising a laminated film comprising a substrate, an adhesive and a sealing layer where the adhesive comprises a polyisocyanate and a polyester polyol that has an acid value of 1-12 mg KOH/g.
EP 3 381 994 A1 discloses packaging materials manufactured from laminated plastic films comprising an adhesive layer which comprises polyisocyanates and polyester polyols. A print layer can be present.
WO 2017/110780 A1 discloses also packaging materials manufactured from laminated plastic films comprising an adhesive layer which comprises polyisocyanates and polyester polyols.
WO 2012/173182 A1 discloses also packaging materials manufactured from laminated plastic films comprising an adhesive layer which comprises polyisocyanates and polyester polyols.

Summary of Invention

Technical Problems

An object of the present invention is to provide, in relation to the laminates of various plastic substrates etc. (also referred to as composite films, or packaging materials): an adhesive characterized by excellent removability from the laminate; a laminate using said adhesive; a method of removing the adhesive to separate the substrates; and a method for producing a recycled substrate from the laminate which uses said adhesive.
One of the objects of the present invention is to provide, in relation to the laminates of various plastic substrates etc. (also referred to as composite films, or packaging materials), an adhesive that can be removed from the laminate and also affords removability from a laminate exhibiting excellent adhesiveness as well as boiling and retort-pouching suitability.
One of the objects of the present invention is to provide a packaging material comprising said adhesive, and a packaging container comprising said packaging material.
One of the objects of the present invention is to provide a method for producing a recycled substrate from a packaging material comprising said adhesive.

Solution to Problems

As a result of diligent studies to solve the above problems, it was discovered that the embodiments described below can solve the above-mentioned problems, leading to the completion of the present invention.
The present invention relates to an adhesive used for forming a removable adhesive layer constituting a packaging material, the packaging material comprising, laminated in the following order from an outer side: a substrate 1 having a plastic layer and a printed layer; the removable adhesive layer; and a sealant substrate 2, wherein the substrate 1 can be detached so that the sealant substrate 2 is recycled,
wherein the adhesive has an acid number of from 5 to 40 mg KOH/g and comprises a polyester polyol component and at least one polyisocyanate component selected from the group consisting of aliphatic polyisocyanates and aromatic-aliphatic polyisocyanates.
Also, the present invention relates to a packaging material comprising a structure in which the substrate 1, the removable adhesive layer formed from said adhesive, and the sealant substrate 2 are laminated in this order from an outer side.
Yet another embodiment of the present invention relates to a packaging container comprising said packaging material.

Furthermore, the present invention relates to a method for producing a recycled substrate, the method comprising immersing a packaging material in a basic aqueous solution,

> wherein the packaging material comprises a structure in which the substrate 1, the removable adhesive layer formed from said adhesive, and the sealant substrate 2 are laminated in this order from an outer side;
> wherein the basic aqueous solution comprises from 0.5 to 20 mass% of a basic compound relative to a total of the basic aqueous solution; and
> wherein a temperature of the basic aqueous solution during the immersing is from 25 to 120°C.

Effects of Invention

Embodiment of the present invention can provide, with respect to the laminates made of various plastic substrates etc. (also referred to as composite films or packaging materials), an adhesive having excellent removability from the laminate, a laminate in which said adhesive is used, a method of removing said adhesive to separate a substrate, and a method for producing a recycled substrate from a laminate in which said adhesive is used.

For example, with respect to a laminate made of various plastic substrates etc., an embodiment of the present invention can provide an adhesive which is removable from the laminate and has excellent adhesiveness as well as removability from the laminate exhibiting boiling and retort-pouching suitability.

Also, for example, an embodiment of the present invention can provide a packaging material comprising said adhesive, and a packaging container comprising said packaging material.

Further, for example, an embodiment of the present invention can provide a method for producing a recycled substrate from a packaging material comprising said adhesive.

Description of Embodiments

The present invention is defined by the independent claims 1, 7 and 11, while specific embodiments are defined in the dependent claims.

In the present application, "removal" means that the removable adhesive layer is neutralized with the basic aqueous solution and becomes dissolved or swollen, thereby at least the substrate is detached. This includes both of the following forms: (1) the removable adhesive layer is dissolved, and the substrate is detached; and (2) the dissolution, swelling, or the like of the removable adhesive layer allows the detachment of the removable adhesive layer and the other substrate(s), from the substrate.

(First Embodiment)

The adhesive of the present embodiment has removability from a laminate. The adhesive can be used as an adhesive for laminates. The adhesive comprises a polyol and a polyisocyanate and has an acid number of 5.0 mg KOH/g or higher, wherein the polyol comprises a polyester polyol component (A) and the polyisocyanate comprises an aliphatic polyisocyanate component (B), the adhesive providing the effect of simultaneously achieving excellent adhesiveness and boiling/retort-pouching suitability and alkali removability, by combining the polyester polyol component (A) and the aliphatic polyisocyanate component (B) and further having the specific acid number.

< Polyester polyol component (A) >

The polyester polyol component (A) is not particularly limited and can be selected from polyester polyols known in the art, and may be used alone or in combination of two or more types. Comprising the polyester polyol component (A) is favorable because of the improvement of the removability due to the presence of the ester bond having a high affinity with the basic aqueous solution (alkaline aqueous solution).

Examples of the polyester polyol component (A) include, but are not limited to, the following:

> polyester polyols obtained by reacting:
>
> > a dibasic acid such as terephthalic acid, isophthalic acid, naphthalene dicarboxylic acid, phthalic anhydride, adipic acid, azelaic acid, sebacic acid, succinic acid, glutaric acid, tetrahydrophthalic anhydride, hexahydrophthalic anhydride, maleic anhydride, and itaconic anhydride, or its dialkyl ester or a mixture thereof (hereinafter also referred to as a carboxyl group component); and
> > a diol such as ethylene glycol, propylene glycol, diethylene glycol, dipropylene glycol, triethylene glycol, butylene glycol, neopentyl glycol, dineopentyl glycol, trimethylolpropane, glycerin, 1,6-hexanediol, 1,4-butanediol, 1,4-cyclohexanedimethanol, 3-methyl-1,5-pentanediol, 3,3'-dimethylolheptane, 1,9-nonanediol, a polyoxyethylene glycol, polyoxypropylene glycol, polytetramethylene ether glycol, polyether polyol, polycarbonate polyol, polyolefin polyol, acrylic polyol, and polyurethane polyol, or a mixture thereof (hereinafter also referred to as a hydroxyl group component); and

polyester polyols obtained by ring-opening polymerization of a lactone, such as polycaprolactone, polyvalerolactone, and poly($\beta$-methyl-$\gamma$-valerolactone).

Two or more types of the carboxyl group components and the hydroxyl group components may be used in combination.

The polyester polyol component (A) preferably has a urethane linkage, and may be a polyester polyurethane polyol obtained by a reaction involving a diisocyanate. Also, the polyester polyol and polyester polyurethane polyol may be those obtained by a reaction further involving an acid anhydride.

Examples of the diisocyanate include 2,4-tolylene diisocyanate, 2,6-tolylene diisocyanate, xylylene diisocyanate, diphenylmethane diisocyanate, isophorone diisocyanate, 1,5-naphthalene diisocyanate, hexamethylene diisocyanate, and hydrogenated diphenylmethane diisocyanate.

Examples of the acid anhydride include pyromellitic dianhydride, mellitic trianhydride, trimellitic anhydride, and trimellitate anhydrides. Examples of the trimellitate anhydride include ethylene glycol bis(anhydro trimellitate), and propylene glycol bis(anhydro trimellitate).

Among these, the polyester polyol component (A) preferably comprises an acid anhydride-modified product of a polyester polyurethane polyol. The polyester polyol component having a urethane linkage allows the adhesive to exhibit excellent heat resistance and adhesiveness. The polyester polyol being an acid anhydride-modified product is preferable because it allows fine control of the acid number and facilitates the obtainment of a polyester polyol having an acid number in a suitable range as described below.

The adhesive of the present embodiment has an acid number of 5.0 mg KOH/g or higher, and therefore, the polyester polyol component (A) preferably has an acid number. The adhesive having the acid number facilitates detachment of the substrate in the basic aqueous solution by neutralization with alkali. The acid number of the polyester polyol component (A) is preferably 8.0 mg KOH/g or higher and more preferably 10.0 mg KOH/g or higher. The acid number of the polyester polyol component (A) is preferably no higher than 45.0 mg KOH/g, and more preferably no higher than 40.0 mg KOH/g. The polyester polyol component (A) having an acid number in the above range can provide excellent detachability from the laminate, because the laminate, in which the removable adhesive layer formed from the adhesive of the present embodiment is layered between two sheet-shaped substrates, can disintegrate by allowing the permeation of the basic aqueous solution when brought into contact with the basic aqueous solution.

For the adhesive comprising a plurality of polyester polyol components, the acid number of the polyester polyol component (A) can be determined from the acid number of each of the polyester polyol components and their mass ratios.

The polyester polyol component (A) has a number average molecular weight (Mn) of preferably from 3000 to 20000, more preferably from 5000 to 15000, and particularly preferably from 7000 to 12000, for withstanding the heat sterilization process and for coating processability of the removable adhesive layer.

The polyester polyol component (A) having a number average molecular weight (Mn) of 3000 or higher is preferable because it can provide sufficient retort-pouching suitability as well as coating processability, and the number average molecular weight (Mn) of 20000 or lower is preferable because it can improve detachability as well as coating processability .

For the polyester polyol component (A), a plurality of polyester polyol components may be used in combination to satisfy various physical property requirements for the packaging material. For example, the polyester polyol component (A) preferably comprises a polyester polyol having a number average molecular weight of from 5000 to 15000, and further, the polyester polyol component (A) preferably comprises a polyester polyol having a number average molecular weight of less than 3000 to improve the tight adherence to the substrates.

The number average molecular weight of the polyester polyol components in that case can be determined from the number average molecular weight of each of the polyester polyol components and their mass ratios. The proportion of the polyester polyol having a number average molecular weight of less than 3000 is preferably from 0 to 30 mass% and preferably from 0 to 20 mass% relative to the total amount of the polyester polyol components. The proportion of no more than 30 mass% is preferable because it does not reduce the retortability.

The number average molecular weight in the present specification refers to a value calibrated with standard polystyrene, obtained by using GPC (gel permeation chromatography) "Shodex GPC System-21" available from Showa Denko K.K. and using tetrahydrofuran as a solvent.

The polyester polyol component (A) can comprise three types of polyols shown below from the viewpoint of adhesiveness and removability:

first polyol - a polyester polyol with an acid number of 10 mg/KOH or higher;

second polyol - a polyester polyol with a number average molecular weight of less than 3000; and

third polyol - a polyester polyol with a number average molecular weight of 5000 or higher, with the proviso that the second polyol and the third polyol are different from the first polyol component.

The first polyol component has a role in imparting removability. The second polyol component contributes to the improvement of the tight adherence to the substrates and hence improvement of the coating processability. The third polyol component has a role in improving the retortability.

The proportion of the first polyol component is preferably 50 mass% or higher relative to the total amount of the polyester polyol component (A), from the viewpoint of providing sufficient removability. The first polyol component is preferably an acid anhydride-modified polyester polyurethane polyol, and further preferably has a number average molecular weight of no lower than 5000 and no higher than 10000 and an acid number of from 15 to 40 mg KOH/g or lower.

The second polyol component preferably has an acid number of 5 mg KOH/g or lower and more preferably 1 mg KOH/g or lower.

The third polyol component is preferably an acid anhydride-modified polyester polyurethane polyol, and further preferably has a number average molecular weight of no lower than 5000 and no higher than 10000 and an acid number of 5 mg KOH/g or lower.

(Additional polyol component)

The adhesive may comprise an additional polyol component other than the polyester polyol component (A). The polyol component that may be comprised in addition to the polyester polyol component (A) is not particularly limited, and the examples include a polycarbonate polyol, a polycaprolactone polyol, a polyether polyol, a polyolefin polyol, an acrylic polyol, a silicone polyol, a castor oil-based polyol, and a fluorinated polyol. These may be used alone or in combination of two or more types.

< Aliphatic polyisocyanate component (B) >

The aliphatic polyisocyanate component (B) is not particularly limited, can be selected from aliphatic polyisocyanates known in the art, and may be used alone or in combination of two or more types. The aliphatic polyisocyanate component (B) is not limited to the following, but a compound derived from an aliphatic diisocyanate or alicyclic diisocyanate known in the art can be used.

Examples of the aliphatic polyisocyanate component (B) include:

aliphatic diisocyanates, such as trimethylene diisocyanate, tetramethylene diisocyanate, hexamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, and 2,6-diisocyanate methylcaproate;

alicyclic diisocyanates, such as 1,4-cyclohexane diisocyanate, 1,3-cyclohexane diisocyanate, 3-isocyanatomethyl-3,5,5-trimethylcyclohexyl isocyanate (hereinafter, isophorone diisocyanate), 4,4'-methylenebis(cyclohexyl isocyanate), methyl 2,4-cyclohexane diisocyanate, methyl 2,6-cyclohexane diisocyanate, 1,4-bis(isocyanatomethyl)cyclohexane, and 1,3-bis(isocyanatomethyl)cyclohexane; or

polyisocyanates such as allophanate-type, nurate-type, biuret-type, or adduct-type derivatives derived from said aliphatic diisocyanates or alicyclic diisocyanates, or complexes thereof.

The derivative is preferably a nurate-type or adduct-type derivative, and particularly preferably an adduct-type.

The aliphatic polyisocyanate component (B) is preferably a polyisocyanate derived from hexamethylene diisocyanate (hereinafter, also referred to as HDI), with which it is easy to strike a balance between the removability and the physical properties of the laminate.

(Additional polyisocyanate component)

The adhesive may comprise an additional polyisocyanate component other than the aliphatic polyisocyanate component (B). The polyisocyanate component that may be comprised in addition to the aliphatic polyisocyanate component (B) is not particularly limited, and the examples include:

aromatic-aliphatic diisocyanates, such as 1,3- or 1,4-xylylene diisocyanate or mixtures thereof, ω,ω'-diisocyanate-1,4-diethylbenzene, and 1,3- or 1,4-bis(1-isocyanate-1-methylethyl)benzene or mixtures thereof;

aromatic diisocyanates, such as toluene diisocyanate and diphenylmethane diisocyanate; or

derivatives of said aromatic-aliphatic diisocyanates or complexes thereof or other polyisocyanates.

The derivative is preferably an adduct-type derivative.

< Additional component >

The adhesive may further comprise an additional component. The additional component may be blended with either the polyol component or the polyisocyanate component, or may be added when the polyol component and the polyisocyanate component are blended.

(Silane coupling agent)

The adhesive can further comprise a silane coupling agent to increase the hot water resistance. Examples of the silane coupling agent include: trialkoxysilanes having a vinyl group, such as vinyltrimethoxysilane and vinyltriethoxysilane; trialkoxysilanes having an amino group, such as 3-aminopropyltriethoxysilane and N-(2-aminoethyl) 3-aminopropyltrimethoxysilane; and trialkoxysilanes having a glycidyl group, such as 3-glycidoxypropyltrimethoxysilane, 2-(3,4-epoxycyclohexyl)ethyltrimethoxysilane, and 3-glycidoxypropyltriethoxysilane. The amount of the silane coupling agent to be added is preferably from 0.1 to 5 mass%, and more preferably from 0.5 to 3 mass%, based on the solid content of the adhesive.

(Phosphorus oxoacid or its derivative)

The adhesive can further comprise a phosphorus oxoacid or its derivative to increase the acid resistance. Among the phosphorus oxoacids or their derivatives, any phosphorus oxoacids having at least one free oxoacid may be used, for example phosphorus acids such as hypophosphorous acid, phosphorous acid, orthophosphoric acid, and hypophosphoric acid; and condensed phosphoric acids such as metaphosphoric acid, pyrophosphoric acid, tripolyphosphoric acid, polyphosphoric acid, and ultraphosphoric acid. In addition, examples of the derivative of the phosphorus oxoacid include those obtained by partially esterifying said phosphorus oxoacids with an alcohol leaving at least one free oxoacid. Examples of the alcohol include aliphatic alcohols, such as methanol, ethanol, ethylene glycol, and glycerin; and aromatic alcohols, such as phenol, xylenol, hydroquinone, catechol, and phloroglucinol. Two or more phosphorus oxoacids or their derivatives may be used in combination. The amount of the phosphorus oxoacid or its derivative to be added is preferably from 0.01 to 10 mass%, more preferably from 0.05 to 5 mass%, and particularly preferably from 0.1 to 1 mass%, based on the solid content of the adhesive.

(Leveling agent or antifoaming agent)

The adhesive can further comprise a leveling agent or an antifoaming agent to improve the appearance of the laminate. Examples of the leveling agent include polyether-modified polydimethylsiloxanes, polyester-modified polydimethylsiloxanes, aralkyl-modified polymethylalkylsiloxanes, polyester-modified hydroxyl group-containing polydimethylsiloxanes, polyetherester-modified hydroxyl group-containing polydimethylsiloxanes, acrylic-based copolymers, methacrylic-based copolymers, polyether-modified polymethylalkylsiloxanes, alkyl acrylate copolymers, alkyl methacrylate copolymers, and lecithins.
Examples of the antifoaming agent include known antifoaming agents such as: silicone resins; silicone solutions; and copolymers of an alkyl vinyl ether, an alkyl acrylate, and an alkyl methacrylate.

(Reaction accelerator)

The adhesive can further comprise a reaction accelerator to accelerate the urethanization reaction. Examples of the reaction accelerator include metal-based catalysts, such as dibutyltin diacetate, dibutyltin dilaurate, dioctyltin dilaurate, and dibutyltin dimaleate; tertiary amines, such as 1,8-diaza-bicyclo(5,4,0)undecene-7 and 1,5-diazabicyclo(4,3,0)nonene-5,6-dibutylamino-1,8-diazabicyclo(5,4,0)undecene-7; and reactive tertiary amines, such as triethanolamine. One type or two or more types of reaction accelerators selected from these groups can be used.
The adhesive may comprise an additive of various types within a range that does not impair the effects of the present embodiment. Examples of the additive include inorganic fillers, such as silica, alumina, mica, talc, aluminum flakes, and glass flakes; layered inorganic compounds; stabilizers (such as antioxidants, thermal stabilizers, ultraviolet absorbers, and anti-hydrolysis agents); anti-rust agents; thickeners; plasticizers; antistatic agents; lubricants; antiblocking agents; colorants; fillers; crystal nucleating agents; and catalysts for adjusting curing reactions.
The adhesive can be used in a solventless form when its viscosity is from 100 to 10000 mPa·s or preferably from 100 to 5000 mPa·s at room temperature to 150°C, or preferably at room temperature to 100°C. If the adhesive has a viscosity higher than the above range, it may be diluted with an organic solvent. An organic solvent inert to the polyisocyanate component is suitably used, and may be selected as appropriate, for example an ester-based solvent such as ethyl acetate; a ketone-based solvent such as methyl ethyl ketone; and an aromatic hydrocarbon-based solvent such as toluene and xylene.

The adhesive of the present embodiment may be a two-part curable urethane-based laminate adhesive comprising a polyester polyol (A) component and an aliphatic polyisocyanate component (B), wherein the acid number immediately after the blending is 5.0 mg KOH/g or higher, more preferably 7.0 mg KOH/g or higher, and particularly preferably 10.0 mg KOH/g or higher. The acid number of the adhesive is in all cases no higher than 40.0 mg KOH/g.

In an example of a specific formulation using the adhesive, the polyol component and the polyisocyanate component are blended to give an equivalence ratio of the isocyanate group of the polyisocyanate component to the hydroxyl group in the polyol (NCO/OH) of 0.3 to 1, then the adhesive is applied to a surface of a sheet-shaped substrate with a solvent type or solventless type laminator, and either after the solvent is evaporated in the case of a solvent based adhesive or as is in the case of a solventless adhesive, an adhesion surface is adhered thereon and the adhesive is cured at room temperature or under heating.

< Laminate >

The laminate of the present embodiment is a laminate in which the removable adhesive layer formed from the removable adhesive described above is layered between at least two sheet-shaped substrates. The adhesive comprised in the removable adhesive layer exhibits excellent removability with a basic aqueous solution and allows removal (separation) of the removable adhesive layer from the sheet-shaped substrates and hence recycling of the sheet-shaped substrates. In other words, the uses of the laminate of the present embodiment may include recycling a sheet-shaped substrate. The basic aqueous solution is not particularly limited, but preferably a 2 mass% sodium hydroxide aqueous solution at 70°C is used.

Also, the laminate of the present embodiment has suitability for retort-pouching and thus can be suitably used in the pouches such as food packaging pouches as well as refill pouches for detergents, drugs, or the like.

For the mechanism of the removal, it is presumed that the basic aqueous solution permeates from the gaps between the layers in the laminate comprising the removable adhesive layer (e.g., a first substrate/the removable adhesive layer/a second substrate) and comes into contact with the removable adhesive layer, and dissolution etc. of the removable adhesive layer allows the removal from the second substrate. Thus, the step of removing is performed preferably in a condition where the laminate has been cut and the cross section exposed, i.e. the removable adhesive layer has been exposed.

(Sheet-shaped substrate)

Examples of the sheet-shaped substrate include those commonly used in packaging laminates, including plastic films; gas barrier substrates (gas barrier layers) such as metal foils; papers; and sealant substrates.

Examples of the plastic film include thermoplastic resin and thermosetting resin films, and a thermoplastic resin film is preferable. Examples of the thermoplastic resin include polyolefins, polyesters, polyamides, polystyrenes, vinyl chloride resins, vinyl acetate resins, ABS resins, acrylic resins, acetal resins, polycarbonate resins, and cellulose-based plastics.

More specifically, any of the following may be used: polyester resin films, such as polyethylene terephthalate, polyethylene naphthalate (PEN), and polylactic acid (PLA); polyolefin resin films, such as polyethylene (PE) and polypropylene (PP); polystyrene resin films; polyamide resin films, such as nylon 6 and poly-p-xylylene adipamide (MXD6 nylon); polycarbonate resin films; polyacrylonitrile resin films; polyimide resin films; multilayer structures thereof (e.g. nylon 6/MXD6/nylon 6, nylon 6/ethylene-vinyl alcohol copolymer/nylon 6), and mixtures thereof. Among these, those having mechanical strength and dimensional stability are preferred.

The thickness of the plastic film is preferably no less than 5 μm and no greater than 200 μm, more preferably no less than 10 μm and no greater than 100 μm, and even more preferably no less than 10 μm and no greater than 50 μm.

Examples of the gas barrier substrate include aluminum foil; and plastic films having a vapor-deposited layer of aluminum, silica, alumina, or the like. For the aluminum foil, a thickness in a range of 3 to 50 μm is preferable from an economical point of view.

Examples of the paper include natural paper and synthetic paper.

Examples of the sealant substrate include polyethylenes such as low-density polyethylene (LDPE), linear low-density polyethylene (LLDPE), and high density polyethylene (HDPE); and polyolefin resins such as acid-modified polyethylene, polypropylene (PP), acid-modified polypropylene, copolymer polypropylene, ethylene-vinyl acetate copolymers, ethylene-(meth)acrylate copolymers, ethylene-(meth)acrylic acid copolymers, and ionomers. Among these, polypropylene resins are preferable from the viewpoint of heat resistance during the retorting and unstretched polypropylenes are particularly preferable from the viewpoint of heat sealability.

The thickness of the sealant substrate is not particularly limited but is preferably in the range of 10 to 60 $\mu$m, and more preferably in the range of 15 to 40 $\mu$m, in view of processability into a packaging material, heat-sealability, and so on. Also, it is possible to impart slippery texture to the sealant substrate or tearable property to the packaging material by providing the sealant substrate with surface unevenness with a height difference in the range of 5 to 20 $\mu$m.

The method of laminating the sealant substrate is not particularly limited. The examples include a method of laminating the removable adhesive layer described below and a sealant film by heat (thermal lamination, dry lamination), and a method of depositing a layer in which a sealant resin is melted and extruded onto the removable adhesive layer and then cooled to solidify (extrusion lamination method).

(Removable adhesive layer)

The removable adhesive layer is a coating obtained with the adhesive of the present embodiment, and can be typically formed by applying the removable adhesive layer to one surface of the first sheet-shaped substrate, followed by a drying step if needed, and adhering it to one surface of the second sheet-shaped substrate.

The amount of the adhesive can be determined freely but is preferably in the range of 0.001 to 6 g/m$^2$ relative to the area of the adhesion surface, and is preferably in the range of 1 to 2 g/m$^2$ for a solventless adhesive and in the range of 1 to 6 g/m$^2$ for a solvent based adhesive.

The structure of the laminate is not particularly limited but it is preferably a structure in which at least one or more layers of plastic films or gas barrier substrates and a sealant are laminated.

Individual examples of the structure of the laminate are given below, but these are nonlimiting examples.

Biaxially-oriented polypropylene (OPP)/removable adhesive layer/unstretched polypropylene (CPP)
OPP/removable adhesive layer/aluminum (AL) vapor-deposited CPP
NY/removable adhesive layer/PE
NY/removable adhesive layer/CPP
PET/adhesive layer/NY/removable adhesive layer/CPP
Transparent vapor-deposited PET/adhesive layer/NY/removable adhesive layer/CPP
PET/adhesive layer/AL/removable adhesive layer/CPP
PET/adhesive layer/AL/removable adhesive layer/PE
PET/adhesive layer/NY/adhesive layer/AL/removable adhesive layer/CPP
PET/adhesive layer/AL/adhesive layer/NY/removable adhesive layer/CPP

In the structures of the laminates described above, what is referred to simply as "adhesive layer" is a layer formed from an adhesive (including a common adhesive) other than the adhesive forming the removable adhesive layer, meaning an adhesive layer not having good detachability with the basic aqueous solution. Thus, the "removable adhesive layer" has different properties than the "adhesive layer".

These laminates can be suitably used in retort pouches or the like, and may have a printed layer, a top coat layer, or the like as needed.

According to the present embodiment, in relation to the laminates of various plastic substrates etc., it is possible to provide an adhesive which can be removed from the laminate, and which has removability from a laminate exhibiting excellent suitability for retort pouching, and provide a laminate using said adhesive. Further, since the adhesive exhibits excellent removability with a basic aqueous solution, it is possible to recycle the sheet-shaped substrate by removing the adhesive from the laminate with a basic aqueous solution and separating the sheet-shaped substrate. The resulting sheet-shaped substrate can be processed into pellets with an extruder or the like and recycled as a regenerated resin.

(Second Embodiment)

The adhesive of the present embodiment has removability from a laminate. The adhesive can be used as an adhesive for laminates. The adhesive may be used for forming a removable adhesive layer in a packaging material, the packaging material comprising a structure in which a substrate 1 having a plastic layer and a printed layer, the removable adhesive layer, and a sealant substrate 2 are laminated in this order from an outer side, wherein the removable adhesive layer is for allowing detachment of the substrate 1 from the packaging material in order to recycle the sealant substrate 2, wherein the adhesive has an acid number of from 5 to 40 mg KOH/g and comprises a polyester polyol component and at least one polyisocyanate component selected from the group consisting of aliphatic polyisocyanates and aromatic-aliphatic polyisocyanates.

The ester bond from the polyol and the aliphatic structure from the polyisocyanate improve the affinity of the adhesive with a basic aqueous solution, facilitating the detachment of the substrate 1 and the sealant substrate 2 with the basic aqueous solution.

With an acid number of 5 mg KOH/g or higher, the adhesive facilitates the detachment of the substrate 1 and the sealant substrate 2 with the basic aqueous solution because the acid number can effect neutralization with the alkali. With an acid number of 40 mg KOH/g or lower, the adhesive can provide good adhesiveness between the substrate 1 and the sealant substrate 2 and good water resistance. As a result, the adhesive can exhibit excellent removability and allow recovery of the sealant substrate while maintaining the adhesive strength required for the adhesive as well as suitability for withstanding the retorting,.

< Removable adhesive layer >

The adhesive of the present embodiment is used for forming the removable adhesive layer. Since the present embodiment has the purpose of obtaining the sealant substrate 2, after the removal, as a recycled substrate/regenerated substrate, it is preferable to remove as much removable adhesive layer and substrate 1 as possible from the sealant substrate 2. Specifically, it is preferable that at least 50 mass% or more be removed out of 100 mass% of the removable adhesive layer, in terms of area or in terms of film thickness direction, more preferably 60 mass% or more, even more preferably 80 mass% or more, and particularly preferably 90 mass% or more be removed.

The basic compound used in the basic aqueous solution is not particularly limited, and the examples that may be suitably used include, but are not limited to, sodium hydroxide (NaOH), potassium hydroxide (KOH), calcium hydroxide ($Ca(OH)_2$), ammonia, barium hydroxide ($Ba(OH)_2$), and sodium carbonate ($Na_2CO_3$). The basic compound is more preferably at least one selected from the group consisting of sodium hydroxide and potassium hydroxide.

For the mechanism of the removal, it is presumed that the basic aqueous solution permeates from the gaps between the layers in the packaging material comprising the removable adhesive layer (e.g., a plastic layer/a printed layer/the removable adhesive layer/a sealant substrate 2) and comes into contact with the removable adhesive layer, and dissolution etc. of the removable adhesive layer allows the removal from the sealant substrate 2. Thus, the step of removing is performed preferably in a condition where the packaging material has been cut and the cross section exposed, i.e. the removable adhesive layer has been exposed.

< Adhesive >

According to the invention, the adhesive forming the removable adhesive layer has an acid number of from 5 to 40 mg KOH/g and comprises a polyester polyol component and at least one polyisocyanate component selected from the group consisting of aliphatic polyisocyanates and aromatic-aliphatic polyisocyanates.

(Polyester polyol component)

For the polyester polyol component, the descriptions of the polyester polyol component (A) of the First Embodiment can be cited. With the polyester polyol component having an acid number of 5 to 40 mg KOH/g, the removable adhesive layer formed from the adhesive of the present embodiment comprising the polyester polyol component can effect excellent removability while maintaining an adhesive strength, representing an optimal adhesive for the purpose of recycling the sealant substrate from the packaging material.

(Additional polyol component)

The adhesive may comprise an additional polyol component other than the polyester polyol component. For the additional polyol component, the descriptions of the First Embodiment can be cited.

(Polyisocyanate component)

The polyisocyanate component is not particularly limited and can be selected from aliphatic polyisocyanates and aromatic-aliphatic polyisocyanates known in the art. A single type or two or more types in combination may be used.

(Aliphatic polyisocyanate component)

For the aliphatic polyisocyanate component, the descriptions of the aliphatic polyisocyanate component (B) of the First Embodiment can be cited.

(Aromatic-aliphatic polyisocyanate component)

Examples of the aromatic-aliphatic polyisocyanate component include: the aromatic-aliphatic polyisocyanates in the additional polyisocyanate component of the First Embodiment; or derivatives thereof or complexes thereof.

< Additional component >

The adhesive may further comprise an additional component (e.g. a silane coupling agent, a phosphorus oxoacid or derivative thereof, a leveling agent or an antifoaming agent, a reaction accelerator, etc.). For the additional component, the descriptions of the First Embodiment can be cited.

The adhesive may comprise an additive of various types within a range that does not impair the effects of the present embodiment. For the additive, the descriptions of the First Embodiment can be cited.

For the viscosity of the adhesive, the descriptions of the First Embodiment can be cited.

The adhesive of the present embodiment may be a two-part curable urethane-based laminate adhesive comprising the polyester polyol component and the polyisocyanate component, wherein the acid number immediately after the blending is 5.0 mg KOH/g or higher, more preferably 7.0 mg KOH/g or higher, and particularly preferably 10.0 mg KOH/g or higher. The acid number of the adhesive of the present embodiment immediately after the blending is no higher than 40.0 mg KOH/g, preferably no higher than 30 mg KOH/g, and more preferably no higher than 20 mg KOH/g.

In blending the polyol component and the polyisocyanate component, the blending may be carried out to give an equivalence ratio of the isocyanate group of the polyisocyanate component to the hydroxyl group in the polyol (NCO/OH) of from 0.3 to 5.0, more preferably from 0.3 to 2.0, and particularly preferably from 0.5 to 1.5.

The removable adhesive layer is formed from the adhesive of the present embodiment. The method of forming the removable adhesive layer typically includes a method wherein the adhesive is applied to one surface of the substrate 1 having the plastic layer and the printed layer, and after the organic solvent is evaporated through a drying step if needed, one surface of the sealant substrate 2 is adhered thereon by using a laminator, and the adhesive is cured at room temperature or under heating to form the removable adhesive layer.

The amount of the applied adhesive after drying can be determined freely but it is usually in the range of from 0.001 to 6 g/m$^2$, and is preferably in the range of from 1 to 2 g/m$^2$ for a solventless adhesive and in the range of from 1 to 6 g/m$^2$ for a solvent based adhesive.

The thickness of the removable adhesive layer is not limited but it is usually in the range of from 0.001 to 5 $\mu$m, and is preferably in the range of from 1 to 2 $\mu$m/m$^2$ for a solventless adhesive, and in the range of from 1 to 5 $\mu$m for a solvent based adhesive.

< Packaging material >

The packaging material in the present embodiment comprises a structure in which the substrate 1 having a plastic layer and a printed layer, the removable adhesive layer formed from the adhesive of the present embodiment, and the sealant substrate 2 are laminated in this order from an outer side, wherein the removable adhesive layer is provided in contact with the substrate 1, and the sealant substrate 2 is provided to the removable adhesive layer on the side opposite to the substrate 1.

(Substrate 1)

The substrate 1 comprises at least a plastic layer and a printed layer in the plurality of layers constituting the substrate 1, and is preferably in the form of a film. The thickness of the substrate 1 is preferably from 5 to 200 $\mu$m and more preferably from 10 to 100 $\mu$m.

[Plastic layer]

Examples of the plastic layer include those commonly used in packaging materials, such as those exemplified for the plastic film described in the sheet-shaped substrate of the First Embodiment.

The thickness of the plastic layer is preferably no less than 5 $\mu$m and no greater than 50 $\mu$m, and more preferably no less than 10 $\mu$m and no greater than 30 $\mu$m s.

[Printed layer]

The printed layer is a layer forming any printed pattern for the purpose of e.g. decoration, aesthetics, or indicating the content, an expiration date, a manufacturer or seller, and also includes a 'solid fill' printed layer. The printed layer can be provided between the substrate and the removable adhesive layer, for example, and may be provided in the entire area or only in some area of the substrate.

The printed layer can be formed by using a pigment or dye known in the art, and may be formed by using a printing ink containing a pigment or dye, and the method of its formation is not particularly limited. The printed layer may be formed of a single layer or a plurality of layers.

The thickness of the printed layer is preferably no less than 0.1 $\mu$m and no greater than 10 $\mu$m, more preferably no less than 1 $\mu$m and no greater than 5 $\mu$m, and even more preferably no less than 1 $\mu$m and no greater than 3 $\mu$m.

Examples of the printing ink for forming the printed layer include those comprising a pigment; a binder; and a medium such as a solvent or water. For the binder, cellulose materials such as nitrocellulose-based materials and cellulose acetate propionate; chlorinated polypropylene-based, vinyl chloride-vinyl acetate copolymer-based, polyester-based, acrylic-based, polyurethane-based or acrylic urethane-based, polyamide-based, polybutyral-based, cyclized rubber-based, or chlorinated rubber-based binders, or any binders obtained by combining these as appropriate may be used.

The method of applying the printing ink is not particularly limited, and the printing ink can be applied by, for example, a gravure coating method, a flexographic coating method, a roll coating method, a bar coating method, a die coating method, a curtain coating method, a spin coating method, or an inkjet method. The printed layer can be formed by leaving the applied printing ink as it is, or by performing air blowing, heating, drying under reduced pressure, ultraviolet irradiation, or other treatment as necessary.

The substrate 1 may further comprise an additional layer in addition to the plastic layer and the printed layer. The additional layer can be provided between the plastic layer and the printed layer, on the plastic layer, or on the printed layer.

Examples of the additional layer that may be provided between the plastic layer and the printed layer include a primer layer and an anchor layer. Examples of the additional layer that may be provided on the plastic layer or on the printed layer include the plastic layers, paper, and gas barrier layers such as metal foils and vapor-deposited layers, described above. A plurality of these additional layers may be formed, and may be laminated via adhesive layers.

For the paper and the gas barrier layers, the descriptions given in the First Embodiment can be cited.

For the adhesive layer for laminating the additional layers, either a known adhesive or the adhesive of the present invention may be used.

(Sealant substrate 2)

For the sealant substrate 2, the descriptions of the sealant of the First Embodiment can be cited.

The thickness of the sealant substrate 2 is not particularly limited but is preferably from 10 to 150 $\mu$m and more preferably from 20 to 70 $\mu$m in view of processability into packaging materials, heat-sealability, etc. Also, it is possible to impart slippery texture, or impart tearable property to the packaging material, by providing the sealant substrate 2 with surface unevenness with a height difference in the range of several $\mu$m.

The method of laminating the sealant substrate is not particularly limited. The examples include a method of heat-laminating the substrate 1 and the sealant substrate 2 with the adhesive of the present embodiment (thermal lamination, dry lamination), and a method in which a sealant resin is melted and extruded onto the removable adhesive layer using the adhesive of the present embodiment, then cooled and solidified to form the sealant substrate 2 (extrusion lamination method).

Individual examples of the structure of the packaging material are given below, but are not limited to these.

Biaxially-oriented polypropylene (OPP)/printed layer/removable adhesive layer/unstretched polypropylene (CPP)
OPP/printed layer/removable adhesive layer/aluminum (AL) vapor-deposited CPP
OPP/printed layer/removable adhesive layer/PE
Printed layer/OPP/removable adhesive layer/CPP
NY/printed layer/removable adhesive layer/PE
Printed layer/NY/removable adhesive layer/CPP
NY/printed layer/removable adhesive layer/CPP
PET/printed layer/removable adhesive layer/CPP
Printed layer/PET/removable adhesive layer/CPP
PET/printed layer/adhesive layer/NY/removable adhesive layer/CPP
Transparent vapor-deposited PET/printed layer/adhesive layer/NY/removable adhesive layer/CPP
PET/printed layer/adhesive layer/AL/removable adhesive layer/CPP
PET/printed layer/adhesive layer/AL/removable adhesive layer/PE
PET/printed layer/adhesive layer/NY/adhesive layer/AL/removable adhesive layer/CPP
PET/printed layer/adhesive layer/AL/adhesive layer/NY/removable adhesive layer/CPP

In the structures of the packaging materials above, what is referred to simply as "adhesive layer" is a layer formed from an adhesive (including a common adhesive) other than the adhesive forming the removable adhesive layer, meaning an adhesive layer not having good detachability with the basic aqueous solution. Thus, the "removable adhesive layer" has different properties than the "adhesive layer".

< Method for producing recycled substrate >

The method for producing a recycled substrate of the present embodiment comprises immersing a packaging material in a basic aqueous solution, wherein the packaging material comprises a structure in which the substrate 1 having a plastic layer and a printed layer, the removable adhesive layer, and the sealant substrate 2 are laminated in this order from an outer side. More specifically, the method for producing a recycled substrate comprises immersing the packaging material in a basic aqueous solution, and detaching the substrate 1 having the plastic layer and the printed layer from the packaging material to recover the sealant substrate 2.

The basic aqueous solution comprises from 0.5 to 20 mass%, more preferably from 1 to 15 mass%, and particularly preferably from 3 to 15 mass% of a basic compound relative to the total basic aqueous solution. With the concentration within the above range, the basic aqueous solution can retain sufficient basicity to remove the removable adhesive by dissolving or swelling it to detach the substrate 1.

The basic aqueous solution separates the substrate 1 and the sealant substrate 2 by permeating from the edge of the packaging material and coming into contact with the removable adhesive layer to dissolve or swell the removable adhesive layer. Thus, in order to perform the removing step efficiently, the packaging material is preferably cut or broken into pieces and brought into a condition in which the removable adhesive layer has been exposed on the cross section when the packaging material is immersed in the basic aqueous solution. In such a case, the printed layer (graphically patterned ink layer), the substrate, etc. can be removed in a shorter time.

The temperature of the basic aqueous solution when the packaging material is immersed is from 25 to 120°C, more preferably from 30 to 120°C, and particularly preferably from 30 to 80°C. The immersion time in the basic aqueous solution is preferably from 1 minute to 24 hours, more preferably from 1 minute to 12 hours, and preferably from 1 minute to 6 hours. The amount of the basic aqueous solution to be used is preferably from 100 to 1 million times the mass of the packing material, and it is preferable to carry out stirring, circulation, or the like of the basic aqueous solution to improve the removal efficiency. The rotation speed is preferably from 80 to 250 rpm and more preferably from 80 to 200 rpm.

Following the steps of detaching the substrate 1 having the plastic layer and the printed layer from the packaging material to recover the sealant substrate 2 and then washing the sealant substrate 2 with water and drying it, the removal rate of the removable adhesive layer is preferably 40 mass% or higher, more preferably 70 mass% or higher, and particularly preferably 90 mass% or higher out of 100 mass% of the removable adhesive layer on the surface of the sealant substrate 2 that can provide a recycled substrate.

According to the present embodiment, by following the steps of immersing the packaging material in the basic aqueous solution, removing the removable adhesive layer, detaching the substrate 1 having a plastic layer and a printed layer from the packaging material to recover the sealant substrate 2, and washing the sealant substrate 2 with water and drying it, the sealant substrate 2 can be recycled and a recycled substrate can be provided. Further, the recycled substrate thus obtained can be processed into pellets with an extruder or the like and can be reused as a regenerated resin.

< Examples of use of the removable adhesive layer in the present embodiment >

One example is the use of a removable adhesive layer, wherein

the removable adhesive layer is formed form an adhesive;
wherein the adhesive has an acid number of from 5 to 40 mg KOH/g and comprises a polyester polyol component and at least one polyisocyanate component selected from the group consisting of aliphatic polyisocyanates and aromatic-aliphatic polyisocyanates;
wherein the use comprises: detaching a substrate 1 from a packaging material in which the substrate 1 having a plastic layer and a printed layer, the removable adhesive layer, and a sealant substrate 2 are laminated in this order from an outer side; and recycling the sealant substrate 2.

In a second example based on the aforementioned example, the polyester polyol component has a number average molecular weight of from 5000 to 15000.

In a third example based on the aforementioned examples, the acid number of the polyester polyol component is from 10 to 40 mg KOH/g.

In a fourth example based on the aforementioned examples, the polyester polyol component has a urethane linkage.

In a fifth example based on the aforementioned examples, the polyester polyol component comprises an acid anhydride-modified product of a polyester polyurethane polyol.

In a sixth example based on the aforementioned examples, the polyester polyol component comprises a polyester polyol with a number average molecular weight of 5000 to 15000 and a polyester polyol with a number average molecular weight of lower than 3000.

(Third Embodiment)

The packaging material of the present embodiment comprises a structure in which at least a first substrate, a printed layer, a polyurethane-based adhesive layer for allowing removal of a second substrate, and the second substrate are laminated in this order from an outer layer side, wherein the polyurethane-based adhesive layer is provided in contact with the second substrate.

It is possible to separate/recover the second substrate from the packaging material, when the polyurethane-based adhesive layer for allowing removal of the second substrate is removed from the second substrate. Thus, the packaging material of the present embodiment may be used to separate/recover the second substrate.

< Polyurethane-based adhesive layer for allowing removal of the second substrate >

The polyurethane-based adhesive layer is neutralized with a basic aqueous solution and dissolved or swollen, and this allows the detachment of the printed layer and the second substrate.

Since the present embodiment aims to obtain the second substrate as a recycled substrate/regenerated substrate, it is preferable to remove as much polyurethane-based adhesive layer as possible from the second substrate. Specifically, it is preferable that at least 50 mass% or more be removed out of 100 mass% of the polyurethane-based adhesive layer, in terms of area or in terms of film thickness direction, more preferably 60 mass% or more, even more preferably 80 mass% or more, and particularly preferably 90 mass% or more be removed.

For the basic aqueous solution, the descriptions of the Second Embodiment can be cited.

For the mechanism of the removal, it is presumed that the basic aqueous solution permeates the gaps between the layers in the packaging material comprising the polyurethane-based adhesive layer (e.g. a plastic layer (first substrate)/a printed layer/the polyurethane-based adhesive layer/a second substrate) and comes into contact with the polyurethane-based adhesive layer, and dissolution etc. of the polyurethane-based adhesive layer allows the removal of the second substrate. Thus, the step of removing is performed preferably in a condition where the packaging material has been cut and the cross section exposed, i.e. the polyurethane-based adhesive layer has been exposed.

The polyurethane-based adhesive layer in the present embodiment is in contact with the second substrate described below and is provided for the purpose of allowing the removal of the second substrate in order to separate and recover the second substrate from the packaging material and to obtain a recycled substrate. Thus, solder resists, color resists, and the like not only belong to a completely different technical field but also represent a different technical idea than the polyurethane-based adhesive layer of the present embodiment, as their purpose is to leave behind a certain amount of film following a treatment with a basic aqueous solution.

< Adhesive for forming polyurethane-based adhesive layer >

The polyurethane-based adhesive layer is not particularly limited as long as it is polyurethane-based, and it is preferably a cured product of a two-part curable polyurethane-based adhesive comprising a polyol component and a polyisocyanate component.

(Polyester polyol component)

For the polyester polyol component, the descriptions of the Second Embodiment can be cited. With the polyester polyol component having an acid number of 5 to 40 mg KOH/g, the polyurethane-based adhesive layer formed from the adhesive comprising the polyester polyol component can effect excellent removability while maintaining an adhesive strength, representing an optimal adhesive for the purpose of recycling the second substrate from the packaging material.

(Polyisocyanate component)

For the polyisocyanate component, the descriptions of the Second Embodiment can be cited.

(Additional component)

The adhesive may further comprise an additional component (e.g. a silane coupling agent, a phosphorus oxoacid or derivative thereof, a leveling agent, an antifoaming agent, a reaction accelerator, etc.). For the additional component, the descriptions of the First Embodiment can be cited.

The adhesive may comprise an additive of various types within a range that does not impair the effects of the present invention. For the additive, the descriptions of the First Embodiment can be cited.

For the viscosity of the adhesive, the descriptions of the First Embodiment can be cited.

The adhesive for forming the polyurethane-based adhesive layer for allowing removal of the second substrate has, immediately after the blending, an acid number of preferably 5 mg KOH/g or higher, more preferably 7 mg KOH/g or higher, even more preferably 10 mg KOH/g or higher, and particularly preferably 20 mg KOH/g or higher. The acid number of the adhesive immediately after the blending is preferably no higher than 45 mg KOH/g, more preferably no higher than 40 mg KOH/g, and even more preferably no higher than 35 mg KOH/g.

With an acid number of 5 mg KOH/g or higher, the detachment of the second substrate with the basic aqueous solution is facilitated. With an acid number of no higher than 45 mg KOH/g, the polyurethane-based adhesive layer has good adhesiveness and water resistance. Thus, the acid number within the above range is preferable because it can effect excellent removability and the recovery of the sealant substrate while maintaining the adhesive strength required for the laminate adhesive as well as suitability for withstanding the retorting.

For the blending ratio of the polyol component and the polyisocyanate component, the descriptions of the Second Embodiment can be cited.

The method of forming the polyurethane-based adhesive layer typically includes a method comprising forming a printed layer on the first substrate, applying the adhesive on the printed layer, evaporating an organic solvent through a drying step as necessary, then adhering the second substrate thereon by using a laminator, and curing the adhesive at room temperature or under heating to form the polyurethane-based adhesive layer.

For the amount of the applied adhesive after drying and the thickness of the polyurethane-based adhesive layer, the descriptions of the Second Embodiment can be cited.

< First substrate >

For the first substrate, a plastic film; a gas barrier substrate (gas barrier layer) such as a metal foil; paper; a sealant substrate; and the like can be used, and the descriptions of the First Embodiment can be cited.

< Printed layer >

For the printed layer, the descriptions of the Second Embodiment can be cited.

A primer layer may be formed between the first substrate and the printed layer if needed to satisfy various performance requirements for the packaging material, such as substrate adhesion. For the primer layer, those known in the art can be used.

< Second substrate >

Examples of the second substrate include those substrates exemplified for the first substrate described above or the sealant substrates, and it is preferably a sealant substrate comprising a polyolefin. The second substrate may have a vapor-deposited film of silica, alumina, or the like.

For the sealant substrate, the descriptions of the sealant substrate 2 of the Second Embodiment can be cited, for example.

The method of laminating the second substrate is not particularly limited, and the examples include a method of adhering a laminated film comprising the substrate 1 and the printed layer to the second substrate by using the polyurethane-based adhesive for allowing removal of the second substrate; and a method in which the resin for constituting the second substrate is melted and extruded onto the polyurethane-based adhesive layer for allowing removal of the second substrate, and then cooled and solidified.

Individual examples of the structure of the packaging material are given below, but the examples are not limited to these.

Biaxially-oriented polypropylene (OPP)/printed layer/polyurethane-based adhesive layer/unstretched polypropylene (CPP)
OPP/printed layer/polyurethane-based adhesive layer/aluminum (AL) vapor-deposited CPP (VMCPP)
OPP/printed layer/polyurethane-based adhesive layer/PE

Biaxially-oriented nylon (ONY)/printed layer/polyurethane-based adhesive layer/PE
NY/printed layer/polyurethane-based adhesive layer/CPP
PET/printed layer/polyurethane-based adhesive layer/CPP
PET/printed layer/adhesive layer/NY/polyurethane-based adhesive layer/CPP
Transparent vapor-deposited PET/printed layer/adhesive layer/NY/polyurethane-based adhesive layer/CPP
PET/printed layer/adhesive layer/AL/polyurethane-based adhesive layer/CPP
PET/printed layer/adhesive layer/AL/polyurethane-based adhesive layer/PE
PET/printed layer/adhesive layer/ONY/adhesive layer/AL/polyurethane-based adhesive layer/CPP
PET/printed layer/adhesive layer/AL/adhesive layer/NY/polyurethane-based adhesive layer/CPP

In the structures of the packaging materials described above, what is referred to simply as "adhesive layer" is a layer formed from an adhesive (including a common adhesive) other than the adhesive forming the removable adhesive layer, meaning an adhesive layer not having good detachability with the basic aqueous solution. Thus, the "polyurethane-based adhesive layer" has different properties than the "adhesive layer".

< Packaging container >

The packaging container of the present embodiment comprises the packaging material, that is, at least part of it is formed from the packaging material. By being formed from the packaging material, it can provide a packaging container which has excellent removability of the sealant substrate comprising a polyolefin and which is suitable for recycling.
The type and use of the packaging container of the present embodiment are not particularly limited but it can be suitably used for, for example, food containers, detergent containers, cosmetics containers, and medical supply containers. The shape of the packaging container is not limited and it can be formed into any shape appropriate for the contents, and can be suitably used as a pouch or the like.

< Method for producing recycled substrate >

A method for producing a recycled substrate in the present embodiment comprises immersing the packaging material in a basic aqueous solution, wherein the packaging material comprises a structure in which the substrate 1, the printed layer, the polyurethane-based adhesive layer for allowing removal of the second substrate, and the second substrate are laminated in this order from an outer layer side. More specifically, the method for producing a recycled substrate in an embodiment of the present invention comprises immersing the packaging material in a basic aqueous solution and detaching the second substrate from the packaging material to recover the second substrate.
For the basic aqueous solution, the step of immersing the packaging material in the basic aqueous solution, the step of detaching and recovering the second substrate, etc., the descriptions of the Second Embodiment can be cited.
After the printed layer is detached from the packaging material to recover the second substrate and then the second substrate is washed with water and dried, the recycled substrate can be obtained. The removal rate of the polyurethane-based adhesive layer on the surface of the second substrate is preferably 80 mass% or higher, more preferably 90 mass% or higher, and even more preferably 95 mass% or higher.
According to the present embodiment, the second substrate can be recycled and a recycled substrate can be provided by following the steps of immersing the packaging material in a basic aqueous solution, detaching the printed layer to remove the second substrate, separating and recovering the second substrate, and washing the second substrate with water and drying it. Further, the recycled substrate thus obtained can be processed into pellets with an extruder or the like and can be reused as a regenerated resin.

Examples

In First to Third Examples below, the present invention will be described in further detail. In each section of the First to Third Examples, "parts" and "%" in examples and comparative examples mean "parts by mass" and "mass%" unless otherwise indicated.

< Measurement of acid number >

About 1 g of a sample was precisely weighed in an Erlenmeyer flask with a stopper, 100 mL of a toluene/ethanol (volume ratio: toluene/ethanol = 2/1) mixture was added to dissolve the sample, a phenolphthalein test solution was added as an indicator, and the solution was kept for 30 seconds. The solution was then titrated with 0.1 N alcoholic potassium hydroxide solution 28 until the solution developed a light red color, and the acid number was determined by

the following formula.

$$\text{Acid number (mg KOH/g)} = (5.611 \times a \times F)/S$$

S: the amount of the sample weighed (g)
a: the consumed amount (mL) of 0.1 N alcoholic potassium hydroxide solution
F: the factor of 0.1 N alcoholic potassium hydroxide solution

< Number average molecular weight (Mn) >

The number average molecular weight was measured by using gel permeation chromatography (GPC) "Shodex GPC System-21" available from Showa Denko K.K. In the measurement, tetrahydrofuran was used as a solvent, and a value calibrated with standard polystyrene was determined.

[First Example]

< Production of polyester polyol component (A) >

(Production Example 1: polyester polyol (P-1))

In a four-necked separable flask were charged 472 parts of isophthalic acid, 528 parts of adipic acid, 263 parts of ethylene glycol, and 937 parts of neopentyl glycol, and an esterification reaction was carried out at 220 to 260°C. After a predetermined amount of water was distilled out, the pressure was gradually reduced, and a deglycol reaction was carried out at 240 to 260°C at 1 mmHg or lower for 5 hours, followed by dilution with ethyl acetate until the non-volatile content reached 50%, and thus a solution of a polyester polyol (P-1) with a number average molecular weight of 2700 and an acid number of 0.5 mg KOH/g was obtained.

(Production Example 2: polyester polyol (P-2))

In a four-necked separable flask were charged 82 parts of terephthalic acid, 682 parts of isophthalic acid, 236 parts of adipic acid, 236 parts of ethylene glycol, 525 parts of neopentyl glycol, and 405 parts of 1,6-hexanediol, and an esterification reaction was carried out at 220 to 260°C. After a predetermined amount of water was distilled out, the pressure was gradually reduced, and a deglycol reaction was carried out at 240 to 260°C at 1 mmHg or lower for 5 hours. Then, 2 parts of isophorone diisocyanate were gradually added, the mixture was reacted at 150°C for about 2 hours, and a polyester polyurethane polyol was obtained. To 100 parts of this polyester polyurethane polyol, 2.83 parts of trimellitic anhydride were added and reacted at 180°C for about 2 hours, followed by dilution with ethyl acetate until the non-volatile content reached 50%, and thus a solution of a partially acid-modified polyester polyol (P-2) with a number average molecular weight of 6000 and an acid number of 16.5 mg KOH/g was obtained.

(Production Example 3: polyester polyol (P-3))

In a four-necked separable flask were charged 262 parts of terephthalic acid, 393 parts of isophthalic acid, 345 parts of adipic acid, 253 parts of ethylene glycol, 662 parts of 2-methyl-1,3-propanediol, and 153 parts of 1,6-hexanediol, and an esterification reaction was carried out at 220 to 260°C. After a predetermined amount of water was distilled out, the pressure was gradually reduced, and a deglycol reaction was carried out at 240 to 260°C at 1 mmHg or lower for 5 hours. Then, 2 parts of isophorone diisocyanate were gradually added, the mixture was reacted at 150°C for about 2 hours, and a polyester polyurethane polyol was obtained. To 100 parts of this polyester polyurethane polyol, 0.62 parts of trimellitic anhydride were added and reacted at 180°C for about 2 hours, followed by dilution with ethyl acetate until the non-volatile content reached 50%, and thus a solution of a partially acid-modified polyester polyol (P-3) with a number average molecular weight of 7000 and an acid number of 3.6 mg KOH/g was obtained.

(Production Example 4: polyester polyol (P-4))

In a four-necked separable flask were charged 682 parts of isophthalic acid, 274 parts of sebacic acid, 72 parts of adipic acid, 202 parts of ethylene glycol, 506 parts of neopentyl glycol, and 493 parts of 1,6-hexanediol, and an esterification reaction was carried out at 220 to 260°C. After a predetermined amount of water was distilled out, the pressure was gradually reduced, and a deglycol reaction was carried out at 240 to 260°C at 1 mmHg or lower for 5 hours. Then, 95 parts of isophorone diisocyanate were gradually added, the mixture was reacted at 150°C for about 2 hours, and a polyester polyurethane polyol was obtained. To 100 parts of this polyester polyurethane polyol, 2.41 parts of ethylene glycol anhydro trimellitate were added and reacted at 180°C for about 2 hours, followed by dilution with ethyl acetate until the non-volatile content reached 50%, and thus a solution of a partially acid-modified polyester polyol (P-4) with a number average molecular weight of 7000 and an acid number of 8.5 mg KOH/g was obtained.

(Production Example 5: polyether polyol (P-5))

First, 81.95 parts of P-2000 (trade name, available from ADEKA Corporation, a bifunctional polyoxypropylene glycol, having a hydroxyl number of 56.1), 382.3 parts of P-400 (trade name, available from ADEKA Corporation, a bifunctional polyoxypropylene glycol, having a hydroxyl number of 265.9), 81.95 parts of T-400 (trade name, available from Mitsui Chemicals, Inc., a trifunctional polyoxypropylene glycol, having a hydroxyl number of 404), 19 parts of dimethylol propionic acid, 132.91 parts of ethyl acetate, 95.53 parts of tolylene diisocyanate, 121 parts of 4,4-diphenylmethane diisocyanate, and 0.22 parts of dibutyltin laurate were charged, the temperature was raised to 90°C, and the reaction was carried out until the peak for the isocyanate group disappeared in the infrared absorption spectrum. The reaction mixture was then diluted with ethyl acetate to bring the non-volatile content to 50%, and thus a solution of a partially acid-modified polyether polyol (P-5) with a number average molecular weight of 9000 and an acid number of 10.4 mg KOH/g was obtained.

The number average molecular weights and acid numbers of the resulting polyester polyol solutions and polyether polyol solution are summarized in Table 1.

[Table 1]

| Table 1 | Production Example 1 | Production Example 2 | Production Example 3 | Production Example 4 | Production Example 5 |
|---|---|---|---|---|---|
| | Polyester polyol | | | | Polyether polyol |
| | P-1 | P-2 | P-3 | P-4 | P-5 |
| Number average molecular weight Mn | 2700 | 6000 | 7000 | 7000 | 9000 |
| Acid number (mg KOH/g) | 0.5 | 16.5 | 3.6 | 8.5 | 10.4 |

< Production of laminate adhesive >

[Examples 1 to 5 and Comparative Examples 1 to 4]

The polyol solutions obtained in Production Examples 1 to 5 and the polyisocyanate were blended at the proportions (mass ratios) shown in Table 2, and ethyl acetate was added to prepare the adhesive solutions with non-volatile contents of 30 mass%.

< Evaluation of laminate adhesive >

Using the adhesive solutions thus obtained, laminates (composite films) were produced according to the method described below. For the resulting laminates, a laminate strength test and a removability test were carried out as described below. The results are shown in Table 2.

(Production of composite film (laminate))

A three-layer composite film (laminate) of a PET film (thickness 12 $\mu$m)/an NY film (thickness 15 $\mu$m)/a CPP film (thickness 70 $\mu$m, surface treated with corona discharge) was produced by the method described below.

That is, the adhesive solution was applied onto the PET film at room temperature by using a laminator, and after the solvent was evaporated, the applied surface was adhered to the NY film. The adhesive solution was then applied onto the NY film surface of the laminate in the same manner as before, and after the solvent was evaporated, the applied surface was adhered to the CPP film. The resulting laminate was then kept at 40°C for 4 days, and the three-layer composite film was thus obtained.

(Laminate strength test (before retorting))

A test piece with a size of 15 mm x 300 mm was produced from the composite film obtained above and measurements were made for the laminate strengths (N/15 mm) between the PET film and the NY film and between the NY film and the CPP film by T-type peel under the condition of a temperature of 20°C and a relative humidity of 65% at a peel rate of 30 cm/min using a tensile tester (EZS-200N available from SHIMADZU Corporation).

(Laminate strength test (after retorting))

A pouch with a size of 21 cm x 30 cm was produced using the composite film obtained above and vacuum-filled with a sauce, as a pouch content, comprising salad oil, ketchup, and 4.2% vinegar at a mass ratio of 1:1:1. The resulting pouch was hot water-sterilized at 10 r.p.m. and at 120°C for 30 minutes under an increased pressure of 3 MPa.
A test piece with a size of 15 mm x 300 mm was produced from the pouch after the retort treatment described above and measurements were made for the laminate strengths (N/15 mm) between the PET film and the NY film and between the NY film and the CPP film in the same manner as in the pre-retorting laminate strength test.

(Removability test)

The three-layer composite film obtained above was cut out to a size of 0.2 cm x 1.5 cm, and this was immersed and stirred in 50 g of a 2% sodium hydroxide (NaOH) aqueous solution at 70°C for 20 minutes, 1 hour, or 12 hours, and then washed with water and dried. The removability of the adhesive from the composite film was visually observed and evaluated according to the following criteria.

A: The adhesive was entirely removed within 20 minutes (very good)
B: The adhesive was entirely removed in over 20 minutes and within 1 hour (good)
C: The adhesive was entirely removed in over 1 hour and within 12 hours (usable)
D: The adhesive was not entirely removed within 12 hours (unusable)

[Table 2]

| Table 2 | | | Mn | Acid number mg KOH/g | Examples | | | | | Comparative Examples | | | |
|---|---|---|---|---|---|---|---|---|---|---|---|---|---|
| | | | | | 1 | 2 | 3 | 4 | 5 | 1 | 2 | 3 | 4 |
| Polyol | Polyester polyol component (A) | P-1 | 2700 | 0.5 | | | 20 | 20 | | | 60 | | |
| | | P-2 | 6000 | 16.5 | 100 | | 70 | 80 | 80 | 100 | 30 | | |
| | | P-3 | 7000 | 3.6 | | | 10 | | 20 | | 10 | 100 | |
| | | P-4 | 7000 | 8.5 | | 100 | | | | | | | |
| | Polyether polyol | P-5 | 9000 | 10.4 | | | | | | | | | 100 |
| Polyisocyanate, | Aliphatic polyisocyanate component (B) | CAT-1 | | | 7.94 | | 7.94 | 7.94 | 7.94 | | 7.94 | 4.48 | |
| | | CAT-2 | | | | 12.61 | | | | | | | |
| | Aromatic polyisocyanate component | CAT-3 | | | | | | | | 14.36 | | | 35.71 |
| Acid number (mg KOH/g) of polyol | | | | | 16.5 | 8.5 | 12 | 13.3 | 13.9 | 16.5 | 5.6 | 3.6 | 10.4 |
| Acid number (mg KOH/g) of adhesive immediately after blending | | | | | 14.4 | 7.4 | 10.5 | 11.6 | 12.1 | 14.4 | 4.9 | 3.3 | 7.6 |
| Evaluation | Laminate strength (N/15 mm) | PET/NY | Before retorting | | 2.9 | 3 | 3.3 | 2.6 | 3.1 | 2.7 | 3.4 | 3.2 | 3.1 |
| | | | After retorting | | 1.5 | 2.8 | 3.2 | 2.6 | 2.7 | 2.6 | 1.7 | 1.2 | 0.4 |
| | | NY/CPP | Before retorting | | 4.7 | 14 | 14.6 | 9.1 | 10.5 | 8.4 | 14 | 10.3 | 9.2 |
| | | | After retorting | | 3.8 | 13.4 | 14.3 | 7.7 | 8.2 | 8.1 | 4 | 3.5 | 0.6 |
| | Removability | | | | A | B | A | A | A | D | D | D | D |

EP 3 888 908 B1

Abbreviations in Table 2 are shown below.

CAT-1: solution of HDI biuret with a solid concentration of 95% in ethyl acetate
CAT-2: solution of XDI-TMP adduct/IPDI-TMP adduct (at a mass ratio of 40/60) with a solid concentration of 60% in ethyl acetate
CAT-3: solution of TDI-TMP adduct with a solid concentration of 52.5% in ethyl acetate

The results in Table 2 revealed that the adhesives comprising the polyester polyol component (A) and the aliphatic polyisocyanate component (B) and having an acid number of 5.0 mg KOH/g or higher have excellent alkali removability and can form a composite film from which the adhesive can be easily removed and which is useful for recycling a plastic film. In particular, the adhesives with an acid number of 10.0 mg KOH/g or higher exhibited excellent alkali removability.

In addition, Examples 1 to 5 all had suitability for retort pouching. Above all, Example 3, which used three specific polyester polyols in combination, exhibited a good laminate strength in addition to the alkali removability.

[Second Example]

< Production of polyol >

(Production Example 1: polyester polyol (P-1))

Into a reaction vessel equipped with a stirrer, a thermometer, a reflux condenser, a tank for drop-by-drop addition, and a nitrogen gas inlet tube were charged 263 parts of ethylene glycol, 468 parts of neopentyl glycol, 472 parts of isophthalic acid, and 528 parts of adipic acid, and the temperature was raised to 250°C while stirring them under a nitrogen stream. After the reaction was continued until the acid number reached 5 or lower, the pressure was gradually reduced, a deglycol reaction was carried out at 1 mmHg for 5 hours, and a polyester polyol was obtained. The reaction mixture was then diluted with ethyl acetate until the non-volatile content reached 50%, and a solution of a polyether polyol (P-1) with a number average molecular weight of 2500 and an acid number of 0.5 mg KOH/g was thus obtained.

(Production Example 2: polyester polyol (P-2))

Into a reaction vessel equipped with a stirrer, a thermometer, a reflux condenser, a tank for drop-by-drop addition, and a nitrogen gas inlet tube were charged 236 parts of ethylene glycol, 263 parts of neopentyl glycol, 202 parts of 1,6-hexanediol, 82 parts of terephthalic acid, 682 parts of isophthalic acid, and 236 parts of adipic acid, and the temperature was raised to 250°C while stirring them under a nitrogen stream. After the reaction was continued until the acid number reached 5 or lower, the pressure was gradually reduced, a deglycol reaction was carried out at 1 mmHg for 5 hours, and a polyester polyol was obtained. Then, 2 parts of isophorone diisocyanate were gradually added, the mixture was reacted at 150°C for about 2 hours, and a polyester polyurethane polyol was obtained. To 100 parts of this polyester polyurethane polyol, 2.5 parts of trimellitic anhydride were added and reacted at 180°C for about 2 hours, followed by dilution with ethyl acetate until the non-volatile content reached 50%, and a solution of a partially acid-modified polyester polyol (P-2) with a number average molecular weight of 6000 and an acid number of 14.5 mg KOH/g was thus obtained.

(Production Example 3: Polyester polyol (P-3))

Into a reaction vessel equipped with a stirrer, a thermometer, a reflux condenser, a tank for drop-by-drop addition, and a nitrogen gas inlet tube were charged 202 parts of ethylene glycol, 331 parts of 2-methyl-1,3-propanediol, 77 parts of 1,6-hexanediol, 262 parts of terephthalic acid, 393 parts of isophthalic acid, and 345 parts of adipic acid, and the temperature was raised to 250°C while stirring them under a nitrogen stream. After the reaction was continued until the acid number reached 5 or lower, the pressure was gradually reduced, a deglycol reaction was carried out at 1 mmHg for 5 hours, and a polyester polyol was obtained. Then, 2 parts of isophorone diisocyanate were gradually added, the mixture was reacted at 150°C for about 2 hours, and a polyester polyurethane polyol was obtained. To 100 parts of this polyester polyurethane polyol, 0.6 parts of trimellitic anhydride were added and reacted at 180°C for about 2 hours, followed by dilution with ethyl acetate until the non-volatile content reached 50%, and a solution of a partially acid-modified polyester polyol (P-3) with a number average molecular weight of 7000 and an acid number of 3.6 mg KOH/g was thus obtained.

(Production Example 4: polyester polyol (P-4))

Into a reaction vessel equipped with a stirrer, a thermometer, a reflux condenser, a tank for drop-by-drop addition, and a nitrogen gas inlet tube were charged 202 parts of ethylene glycol, 253 parts of neopentyl glycol, 247 parts of 1,6-hexanediol, 682 parts of isophthalic acid, 72 parts of adipic acid, and 274 parts of sebacic acid, and the temperature was raised to 250°C while stirring them under a nitrogen stream. After the reaction was continued until the acid number reached 5 or lower, the pressure was gradually reduced, a deglycol reaction was carried out at 1 mmHg for 5 hours, and a polyester polyol was obtained. Then, 20 parts of isophorone diisocyanate were gradually added, the mixture was reacted at 150°C for about 2 hours, and a polyester polyurethane polyol was obtained. To 100 parts of this polyester polyurethane polyol, 3.5 parts of ethylene glycol bis(anhydrotrimellitate) were added and reacted at 180°C for about 2 hours, followed by dilution with ethyl acetate until the non-volatile content reached 50%, and a solution of a partially acid-modified polyester polyol (P-4) with a number average molecular weight of 8000 and an acid number of 9.9 mg KOH/g was thus obtained.

(Production Example 5: polyester polyol (P-5))

Into a reaction vessel equipped with a stirrer, a thermometer, a reflux condenser, a tank for drop-by-drop addition, and a nitrogen gas inlet tube were charged 240 parts of ethylene glycol, 253 parts of neopentyl glycol, 247 parts of 1,6-hexanediol, 682 parts of isophthalic acid, 72 parts of adipic acid, and 274 parts of sebacic acid, and the temperature was raised to 250°C while stirring them under a nitrogen stream. After the reaction was continued until the acid number reached 5 or lower, the pressure was gradually reduced, a deglycol reaction was carried out at 1 mmHg for 5 hours, and a polyester polyol was obtained. Then, 40 parts of isophorone diisocyanate were gradually added, the mixture was reacted at 150°C for about 2 hours, and a polyester polyurethane polyol was obtained. To 100 parts of this polyester polyurethane polyol, 13.0 parts of ethylene glycol bis(anhydrotrimellitate) were added and reacted at 180°C for about 2 hours, followed by dilution with ethyl acetate until the non-volatile content reached 50%, and a solution of a partially acid-modified polyester polyol (P-5) with a number average molecular weight of 9500 and an acid number of 32.1 mg KOH/g was thus obtained.

(Production Example 6: polyester polyol (P-6))

Into a reaction vessel equipped with a stirrer, a thermometer, a reflux condenser, a tank for drop-by-drop addition, and a nitrogen gas inlet tube were charged 283 parts of ethylene glycol, 468 parts of neopentyl glycol, 472 parts of isophthalic acid, and 528 parts of adipic acid, and the temperature was raised to 250°C while stirring them under a nitrogen stream. After the reaction was continued until the acid number reached 5 or lower, the pressure was gradually reduced, a deglycol reaction was carried out at 1 mmHg for 5 hours, and a polyester polyol was obtained. To 100 parts of this polyester polyol, 3.5 parts of trimellitic anhydride were added and reacted at 180°C for about 2 hours, followed by dilution with ethyl acetate until the non-volatile content reached 50%, and a solution of a partially acid-modified polyester polyol (P-6) with a number average molecular weight of 2000 and an acid number of 21.1 mg KOH/g was thus obtained.

(Production Example 7: polyether polyol (P-7))

First, 81.95 parts of P-2000 (trade name, available from ADEKA Corporation, a bifunctional polyoxypropylene glycol, having a hydroxyl number of 56.1), 382.3 parts of P-400 (trade name, available from ADEKA Corporation, a bifunctional polyoxypropylene glycol, having a hydroxyl number of 265.9), 81.95 parts of T-400 (trade name, available from Mitsui Chemicals, Inc., a trifunctional polyoxypropylene glycol, having a hydroxyl number of 404), 19 parts of dimethylol propionic acid, 132.91 parts of ethyl acetate, 95.53 parts of tolylene diisocyanate, 121 parts of 4,4-diphenylmethane diisocyanate, and 0.22 parts of dibutyltin laurate were charged, the temperature was raised to 90°C, and the reaction was carried out until the peak for the isocyanate group disappeared in the infrared absorption spectrum. The reaction mixture was then diluted with ethyl acetate to bring the non-volatile content to 50%, and thus a solution of a partially acid-modified polyether polyol (P-7) with a number average molecular weight of 9000 and an acid number of 10.4 mg KOH/g was obtained.
The number average molecular weights and acid numbers of the resulting polyester polyol solutions and polyether polyol solution are summarized in Table 3.

[Table 3]

| | Production Example 1 | Production Example 2 | Production Example 3 | Production Example 4 | Production Example 5 | Production Example 6 | Production Example 7 |
|---|---|---|---|---|---|---|---|
| | Polyester polyol | | | | | | Polyether polyol |
| | P-1 | P-2 | P-3 | P-4 | P-5 | P-6 | P-7 |
| Number average molecular weight Mn | 2500 | 6000 | 7000 | 8000 | 9500 | 2000 | 9000 |
| Acid number (mg KOH/g) | 0.5 | 14.5 | 3.6 | 9.9 | 32.1 | 21.1 | 10.4 |

< Adjustment of polyisocyanate >

(Production Example 8: polyisocyanate (C-1))

Coronate 2785 (a biuret-type polyisocyanate derived from hexamethylene diisocyanate, available from Tosoh Corporation) was diluted in ethyl acetate such that the non-volatile content was adjusted to 50% and NCO% to 9.6%, and a solution of a polyisocyanate (C-1) was thus obtained.

(Production Example 9: polyisocyanate (C-2))

Vestanat T1890/100 (a nurate-type polyisocyanate derived from isophorone diisocyanate (hereinafter, IPDI), available from Evonik Corporation) was diluted in ethyl acetate such that the non-volatile content was adjusted to 50% and NCO% to 8.7%, and a solution of a polyisocyanate (C-2) was thus obtained.

(Production Example 10: polyisocyanate (C-3))

Takenate D-110NB (a trimethylolpropane adduct-type polyisocyanate derived from xylylene diisocyanate (hereinafter, XDI), available from Mitsui Chemicals, Inc.) was diluted in ethyl acetate such that the non-volatile content was adjusted to 50% and NCO% to 7.9%, and a solution of a polyisocyanate (C-3) was thus obtained.

(Production Example 11: polyisocyanate (C-4))

Coronate L (a trimethylolpropane adduct-type polyisocyanate derived from toluene diisocyanate (hereinafter, TDI), available from Tosoh Corporation) was diluted in ethyl acetate such that the non-volatile content was adjusted to 50% and NCO% to 8.8%, and a solution of a polyisocyanate (C-4) was thus obtained.

(Production Example 12: polyisocyanate (C-5))

Millionate MR-200 (a polymeric-type polyisocyanate derived from diphenylmethane diisocyanate (hereinafter, MDI), available from Tosoh Corporation) was diluted in ethyl acetate such that the non-volatile content was adjusted to 50% and NCO% to 15.5%, and a solution of a polyisocyanate (C-5) was thus obtained.

< Production of adhesive >

[Examples 1 to 11 and Comparative Examples 1 to 6]

The polyol solutions obtained in Production Examples 1 to 7 and the polyisocyanate solutions obtained in Production Examples 8 to 12 were blended at the proportions (mass ratios) shown in Table 4, and ethyl acetate was added to prepare the adhesive solutions with non-volatile contents of 30 mass%.

< Evaluation of Adhesive >

Using the resulting adhesive solutions, packaging materials was produced according to the method described below. For the packaging materials thus obtained, the laminate strength (adhesive strength) test and the removability test were carried out as described below. The results are shown in Table 4.

(Production of packaging material 1)

The printing inks (Rio Alpha R39 Indigo and R631 White, available from Toyo Ink Co., Ltd.) were each diluted with a mixed solvent of ethyl acetate/IPA (at a mass ratio of 70/30) to a viscosity of 16 seconds (25°C, Zahn cup No. 3). Each of the diluted printing inks was printed on a corona-treated PET film (thickness 12 $\mu$m), in the order of indigo and white, with a gravure proofing two-color machine equipped with a solid printing plate having a plate depth of 35 $\mu$m. The printing speed was set at 50 m/min, drying was carried out at 50°C in each unit, and a laminate of PET/printed layer was obtained. The thickness of the printed layer was set at 1 $\mu$m.

An adhesive (TM-250HV/CAT-RT86L-60, available from Toyo-Moton, Ltd.) was then applied onto the printed layer of the resulting laminate by using a laminator, and after the solvent was evaporated, the applied surface was adhered to an NY film with a thickness of 15 $\mu$m. The thickness of the adhesive layer was set at 3 $\mu$m.

Next, each of the adhesives obtained in the Examples and Comparative Examples was applied to the NY film surface of the resulting laminate in the same manner as before, and after the solvent was evaporated, the applied surface was adhered to a 70-$\mu$m thick CPP film which had been surface-treated with corona discharge. The thickness of the removable adhesive layer was set at 3 $\mu$m.

The resulting laminate was then kept at 40°C for 4 days, to obtain a packaging material having the structure: the PET film (12 $\mu$m)/the printed layer (1 $\mu$m)/the adhesive layer (3 $\mu$m)/the NY film (15 $\mu$m)/the removable adhesive layer (3 $\mu$m)/the CPP film (thickness of 70 $\mu$m) .

(Production of Packaging Material 2)

The printing inks (Rio Alpha R39 Indigo and R631 White, available from Toyo Ink Co., Ltd.) were each diluted with a mixed solvent of ethyl acetate/IPA (at a mass ratio of 70/30) to a viscosity of 16 seconds (25°C, Zahn cup No. 3). Each of the diluted printing inks was printed on a corona-treated OPP film (thickness 20 $\mu$m), in the order of indigo and white, with a gravure proofing two-color machine equipped with a solid printing plate having a plate depth of 35 $\mu$m. The printing speed was set at 50 m/min, drying was carried out at 50°C in each unit, and a laminate of OPP/printed layer was obtained. The thickness of the printed layer was set at 1 $\mu$m.

Next, each of the adhesives obtained in the Examples and Comparative Examples was applied onto the printed layer of the resulting laminate by using a laminator, and after the solvent was evaporated, the applied surface was adhered to a 25-$\mu$m thick CPP film which had been surface-treated with corona discharge.

The resulting laminate was then kept at 40°C for 4 days, to obtain a packaging material having the structure: the OPP film (20 $\mu$m)/the printed layer (1 $\mu$m)/the removable adhesive layer (2.0 $\mu$m)/the CPP film (25 $\mu$m) .

< Evaluation of packaging material 1 >

(Laminate strength test (before retorting))

The laminate strength (N/15 mm) between the NY film and the CPP film was measured from the packaging material 1 obtained above under the same conditions as in the First Example.

(Laminate strength test (after retorting))

Using the packaging material 1 obtained above, the laminate strength (N/15 mm) between the NY film and the CPP film was measured under the same conditions as in the First Example.

(Removability test)

Three test pieces with a size of 2.0 cm x 2.0 cm were cut out from the pouch after the retort treatment described above and immersed/stirred in 50 g of a 2% sodium hydroxide (NaOH) aqueous solution at 70°C and a rotation speed of 100 rpm. The time taken for the detachment to occur between the NY film and the CPP film was measured, and the removability was evaluated according to the following criteria.

A: Complete detachment occurs between the NY film and the CPP film within 20 minutes (very good)
B: Complete detachment occurs between the NY film and the CPP film in 20 minutes to 1 hour(good)
C: Complete detachment occurs between the NY film and the CPP film in 1 hour to 12 hours (usable)
D: Complete detachment does not occur between the NY film and the CPP film within 12 hours (unusable)

(Removal rate)

A test piece with a size of 2.0 cm x 2.0 cm was cut out from the pouch after the retort treatment described above and immersed/stirred in 50 g of a 2% sodium hydroxide (NaOH) aqueous solution at 70°C and at a rotation speed of 100 rpm for 1 hour to detach the NY and the CPP from each other, and then washed with water and dried, to produce a recycled CPP film with a size of 2.0 cm x 2.0 cm.

The recycled CPP film thus obtained was checked for the presence or absence of the absorption peak for the adhesive at a total of 5 locations including 4 edge portions and a center portion on the surface that had been in contact with the removable adhesive layer, by using an FT-IR (available from BRUKER, model: ALPHA), and the removal rate was evaluated according to the following criteria. The test piece in which the NY film and the CPP film did not detach from each other within 1 hour was deemed unevaluable.

A: No absorption peak for the adhesive is observed at all 5 locations (the removal rate is approximately 100%: very good)
B: The absorption peak for the adhesive is observed at only 1 of the 5 locations (the removal rate is approximately 80%: good)
C: The absorption peak for the adhesive is observed at 2 or 3 of the 5 locations (the removal rate is approximately from 40 to 60%: usable)
D: The absorption peak for the adhesive is observed at 4 or more of the 5 locations (the removal rate is approximately 20%: unusable)

< Evaluation of packaging material 2 >

(Adhesive strength)

The laminate strength (N/15 mm) between the OPP film and the CPP film was measured from the packaging material 2 obtained above under the same conditions as for the packaging material 1.

(Removability)

For the packaging material 2 obtained above, the time taken for the detachment of the OPP film and the CPP film from each other was measured under the same conditions as for the packaging material 1, and the removability was evaluated according to the following criteria.

A: Complete detachment occurs between the OPP and the CPP within 20 minutes (very good)
B: Complete detachment occurs between the OPP and the CPP in 20 minutes to 1 hour (good)
C: Complete detachment occurs between the OPP and the CPP in 1 hour to 12 hours (usable)
D: Complete detachment does not occur between the OPP and the CPP within 12 hours (unusable)

(Removal rate)

For the packaging material 2 obtained above, a recycled CPP film with a size of 2.0 cm x 2.0 cm was obtained under the same conditions as for the packaging material 1.

The evaluation method and evaluation criteria of the resulting recycled CPP film are the same as those for the packaging material 1.

A: No absorption peak for the adhesive is observed at all 5 locations (the removal rate is approximately 100%: very good)
B: The absorption peak for the adhesive is observed at only 1 of the 5 locations (the removal rate is approximately 80%: good)
C: The absorption peak for the adhesive is observed at 2 or 3 of the 5 locations (the removal rate is approximately from 40 to 60%: usable)
D: The absorption peak for the adhesive is observed at 4 or more of the 5 locations (the removal rate is approximately 20%: unusable)

[Table 4]

| Table 4 | | | | Examples | | | | | | | | | | | Comparative exemples | | | | | |
|---|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 1 | 2 | 3 | 4 | 5 | 6 |
| Polyol component | Polyether polyol | | P-1 | | | | | 20 | 20 | | | | | | | 20 | 20 | | 40 | |
| | | | P-2 | 100 | | 100 | 100 | 70 | 80 | 80 | | | | | 100 | 70 | 70 | | 20 | |
| | | | P-3 | | | | | 10 | | 20 | | | | | | 10 | 10 | 100 | 40 | |
| | | | P-4 | | 100 | | | | | | | | | | | | | | | |
| | | | P-5 | | | | | | | | 100 | 100 | 100 | 90 | | | | | | |
| | | | P-6 | | | | | | | | | | | 10 | | | | | | |
| | Polyether polyol | | P-7 | | | | | | | | | | | | | | | | | 100 |
| Polyisocyanate component | Aliphatic polyisocyanate I | HDI derivate | C-1 | 4 | 8 | | | 8 | 8 | 4 | 8 | | | 8 | | | | 8 | 16 | 28 |
| | | IPDI derivative | C-2 | | | 4 | | | | | | 8 | | | | | | | | |
| | aliphatic polyisocyanate | XDI derivative | C-3 | | | | 4 | | | | | | 8 | | | | | | | |
| | polyisoocyanate | | | | | | | | | | | | | | 4 | 8 | | | | |
| | | TDI derivative | I C-5 | | | | | | | | | | | | 14.5 | 8 10.6 | 8 | | | |
| Acid number (mg KOH/g) of polyol | | | | 145 | 9.9 | 14.5 | 145 | 10.6 | 11.7 | 12.3 | 32.1 | 32.1 | 32.1 | 31 | | | 10.6 | 3.6 | 4.5 | 10.4 |
| Acid number (mg KOH/g) of adhesive immediately after blending | | | | 13.9 | 92 | 13.9 | 13.9 | 9.8 | 10.8 | 11.8 | 29.7 | 29.7 | 29.7 | 28.7 | 13.9 | 9.8 | 9.8 | 3.3 | 3.9 | 8.1 |

EP 3 888 908 B1

| Table 4 | | | | Examples | | | | | | | | | | | Comparative exemples | | | | | |
|---|---|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 1 | 2 | 3 | 4 | 5 | 6 |
| Evaluation | Packaging material 1 | Laminate strenght between (N/15 mm) | Before re-torting re-torting | 5.2 | 13.2 | 7.7 | 6.8 | 13.6 | 12.7 | 8.7 | 12.8 | 13.5 | 121 | 13.6 | 7.4 | 9.8 | 5.1 | 8.9 | 94 | 6.6 |
| | | | After | 4.8 | 11.8 | 6.7 | \| 5.6 \| | 12.2 | \| 11.9 | \| 6.9 | 10.9 | 10.5 | \| 10.8 | \|112 | \| 6.1 | 8.9 \| | 4.4 \| | 6.6 | \| 8.2 | \| 5.3 \| |
| | | | Removability Sodium hydroxide 70°C, 2% aqueous | B | B | B | B | B | A | B | A | B | B | A | C | C | C | C | C | D |
| | | Removal rate | Sodium hydroxide 70°C, 2% aqueous | B | B | B | B | B | B | C | B | B | B | A | Unevalu-able | Unevalu-able | Unevalu-able | Unevalu-able | Unevalu-able | Unevalu-able |
| | | laminae strenght be-tween (N/15 mm) | Before retorting | 2.2 | 1.6 | 1.3 | 1.2 | 1.7 | 1.5 | 1.1 | 1.5 | 1.3 | 1.2 | 1.7 | 0.9 | 0.7 | 0.5 | 1.5 | 1.5 | 1.3 |
| | | Packag-ing materi-al 2 Re-movability | Sodium hydroxide 70°C, 2% aqueous solution | B | B | B | B | A | A | B | A | B | A | A | C | D | D | D | D | D |
| | | Removal rate | Sodium hydroxide 70°C, 2% aqueous 2% aque-ous solu-tion | B | B | B | B | B | B | C | A | B | B | A | Unevalu-able | Unevalu-able | Unevalu-able | Unevalu-able | Unevalu-able | Unevalu-able |

EP 3 888 908 B1

As apparent from the results shown in Table 4, the adhesive comprising a polyester polyol component including an acid anhydride-modified product of a polyester polyurethane polyol, and at least one polyisocyanate component selected from the group consisting of aliphatic polyisocyanates and aromatic-aliphatic polyisocyanates, and having an acid number of 5 to 40 mg KOH/g, has suitability for retort pouching, and excels in alkali removability, and allows easy separation of the sealant substrate from the packaging material. This can increase the recyclability of the sealant substrate.

In particular, Examples 5, 6, and 11 which additionally used polyester polyols with a number average molecular weight of less than 3000 exhibited excellent laminate strengths in addition to the excellent alkali removability and removal rate.

[Third Example]

< Production of aqueous primer >

In a reactor equipped with a thermometer, a stirrer, a reflux condenser, and a nitrogen gas inlet tube were reflux-reacted 100 parts of a poly(3-methyl-1,5-pentane adipate)diol (hereinafter "PMPA") with a number average molecular weight of 2000, 40 parts of a poly(3-methyl-1,5-pentane adipate)diol (hereinafter "PMPA") with a number average molecular weight of 1000, 35 parts of a polyethylene glycol (hereinafter "PEG") with a number average molecular weight of 2000, 30 parts of 2,2-dimethylol propionic acid (hereinafter "DMPA"), and 109.6 parts of isophorone diisocyanate (hereinafter "IPDI") in 77.4 parts of methyl ethyl ketone (hereinafter "MEK") at 80°C for 6 hours while nitrogen gas was introduced, to form an isocyanate-terminated prepolymer, and then the reaction mixture was cooled to 40°C and thus a solution of the isocyanate-terminated prepolymer in the solvent was obtained.

Next, the resulting isocyanate-terminated prepolymer was gradually added at room temperature to a mixture of 14 parts of isophorone diamine (hereinafter "IPDA"), 8.6 parts of 2-hydroxyethylethylenediamine (hereinafter "AEA"), 1.0 parts of dibutylamine (hereinafter "DBA"), and 699.9 parts of acetone and reacted at 80°C for 1 hour, to obtain a solvent-type polyurethane resin solution.

Next, the solvent-type polyurethane resin solution was neutralized and made watersoluble by gradually adding 13.6 parts of 28% ammonia water and 777.3 parts of ion-exchanged water, and further, the total amounts of MEK and acetone were distilled off under azeotropic conditions. Water was then added to adjust the solid content, to obtain a polyurethane resin with an acid number of 37.7 mg KOH/g, a solid content concentration of 30%, and a mass average molecular weight of 30000.

An aqueous primer was obtained by mixing 65 parts of the polyurethane resin obtained above, 2 parts of a styrene maleic resin derivative ("SMA1440H" available from Sartomer Company, Inc., an aqueous solution with a solid content of 30%, an ammonia-neutralized product of an alcohol-modified styrene maleic acid), 4 parts of a vinyl chloride-based emulsion ("VINYBLAN 700" available from Nissin Chemical Co., Ltd., an aqueous solution with a solid content of 30%, a copolymer of vinyl chloride and another monomer having a double bond), 24 parts of water, and 5 parts of isopropanol (hereinafter "IPA") and stirring the mixture with a disper for 30 minutes.

< Production of polyol >

(Production Example 1: polyester polyol (P-1))

Into a reaction vessel equipped with a stirrer, a thermometer, a reflux condenser, a tank for drop-by-drop addition, and a nitrogen gas inlet tube were charged 830 parts of diethylene glycol and 870 parts of adipic acid, and the temperature was raised to 240°C while stirring them under a nitrogen stream to carry out an esterification reaction. After the reaction was continued until a predetermined amount of water was distilled off and the acid number reached 5 or lower, the pressure was gradually reduced, and a deglycol reaction was carried out at 1 mmHg or lower for 5 hours to obtain a polyester polyol. The reaction mixture was then diluted with ethyl acetate until the non-volatile content reached 50%, to obtain a solution of a polyether polyol (P-1) with a number average molecular weight of 2300 and an acid number of 0.7 mg KOH/g.

(Production Example 2: Polyester polyol (P-2))

Into a reaction vessel equipped with a stirrer, a thermometer, a reflux condenser, a tank for drop-by-drop addition, and a nitrogen gas inlet tube were charged 279 parts of ethylene glycol, 242 parts of neopentyl glycol, 189 parts of 1,6-hexanediol, 81 parts of terephthalic acid, 710 parts of isophthalic acid, and 218 parts of adipic acid, and the temperature was raised to 250°C while stirring them under a nitrogen stream to carry out an esterification reaction. After the reaction was continued until a predetermined amount of water was distilled off and the acid number reached 5 or lower, the pressure was gradually reduced, and a deglycol reaction was carried out at 1 mmHg or lower for 5 hours to obtain a polyester polyol. Then, 2 parts of isophorone diisocyanate were gradually added, and the mixture was reacted at 150°C for about 2 hours to obtain a polyester polyurethane polyol. To 100 parts of this polyester polyurethane polyol, 2.5 parts of trimellitic anhydride were added and reacted at 180°C for about 2 hours, followed by dilution with ethyl acetate until the non-volatile content reached 50%, to obtain a solution of a partially acid-modified polyester polyol (P-2) with a number average molecular weight of 6000 and an acid number of 14.6 mg KOH/g.

(Production Example 3: Polyester polyol (P-3))

Into a reaction vessel equipped with a stirrer, a thermometer, a reflux condenser, a tank for drop-by-drop addition, and a nitrogen gas inlet tube were charged 142 parts of ethylene glycol, 156 parts of diethylene glycol, 148 parts of neopentyl glycol, 350 parts of 1,6-hexanediol, 437 parts of terephthalic acid, 437 parts of isophthalic acid, and 192 parts of adipic acid, and the temperature was raised to 250°C while stirring them under a nitrogen stream to carry out an esterification reaction. After the reaction was continued until a predetermined amount of water was distilled off and the acid number reached 5 or lower, the pressure was gradually reduced, and a deglycol reaction was carried out at 1 mmHg or lower for 5 hours to obtain a polyester polyol. To 100 parts of this polyester polyol, 0.5 parts of trimellitic anhydride were added and reacted at 180°C for about 2 hours, followed by dilution with ethyl acetate until the non-volatile content reached 50%, to obtain a solution of a partially acid-modified polyester polyol (P-3) with a number average molecular weight of 7500 and an acid number of 3.1 mg KOH/g.

(Production Example 4: Polyester polyol (P-4))

Into a reaction vessel equipped with a stirrer, a thermometer, a reflux condenser, a tank for drop-by-drop addition, and a nitrogen gas inlet tube were charged 168 parts of ethylene glycol, 312 parts of neopentyl glycol, 217 parts of 1,6-hexanediol, 89 parts of terephthalic acid, 568 parts of isophthalic acid, and 345 parts of sebacic acid, and the temperature was raised to 250°C while stirring them under a nitrogen stream to carry out an esterification reaction. After the reaction was continued until a predetermined amount of water was distilled off and the acid number reached 5 or lower, the pressure was gradually reduced, and a deglycol reaction was carried out at 1 mmHg or lower for 5 hours to obtain a polyester polyol. Then, 20 parts of isophorone diisocyanate were gradually added, and the mixture was reacted at 150°C for about 2 hours to obtain a polyester polyurethane polyol. To 100 parts of this polyester polyurethane polyol, 3.0 parts of ethylene glycol bis(anhydrotrimellitate) were added and reacted at 180°C for about 2 hours, followed by dilution with ethyl acetate until the non-volatile content reached 50%, to obtain a solution of a partially acid-modified polyester polyol (P-4) with a number average molecular weight of 8000 and an acid number of 8.5 mg KOH/g.

(Production Example 5: Polyester polyol (P-5))

Into a reaction vessel equipped with a stirrer, a thermometer, a reflux condenser, a tank for drop-by-drop addition, and a nitrogen gas inlet tube were charged 124 parts of ethylene glycol, 212 parts of neopentyl glycol, 368 parts of 1,6-hexanediol, 645 parts of isophthalic acid, 36 parts of adipic acid, and 265 parts of sebacic acid, and the temperature was raised to 250°C while stirring them under a nitrogen stream to carry out an esterification reaction. After the reaction was continued until a predetermined amount of water was distilled off and the acid number reached 5 or lower, the pressure was gradually reduced, and a deglycol reaction was carried out at 1 mmHg or lower for 5 hours to obtain a polyester polyol. Then, 35 parts of isophorone diisocyanate were gradually added, and the mixture was reacted at 150°C for about 2 hours to obtain a polyester polyurethane polyol. To 100 parts of this polyester polyurethane polyol, 12.0 parts of ethylene glycol bis(anhydrotrimellitate) were added and reacted at 180°C for about 2 hours, followed by dilution with ethyl acetate until the non-volatile content reached 50%, to obtain a solution of a partially acid-modified polyester polyol (P-5) with a number average molecular weight of 9000 and an acid number of 30.3 mg KOH/g.

(Production Example 6: Polyester polyol (P-6))

Into a reaction vessel equipped with a stirrer, a thermometer, a reflux condenser, a tank for drop-by-drop addition, and a nitrogen gas inlet tube were charged 58 parts of ethylene glycol, 412 parts of diethylene glycol, 343 parts of neopentyl glycol, 517 parts of isophthalic acid, and 393 parts of adipic acid, and the temperature was raised to 250°C while stirring them under a nitrogen stream to carry out an esterification reaction. After the reaction was continued until a predetermined amount of water was distilled off and the acid number reached 5 or lower, the pressure was gradually reduced, and a deglycol reaction was carried out at 1 mmHg or lower for 5 hours to obtain a polyester polyol. To 100 parts of this polyester polyol, 4.0 parts of trimellitic anhydride were added and reacted at 180°C for about 2 hours, followed by dilution with ethyl acetate until the non-volatile content reached 50%, to obtain a solution of a partially acid-modified polyester polyol (P-6) with a number average molecular weight of 2000 and an acid number of 23.5 mg KOH/g.

(Production Example 7: polyether polyol (P-7))

Into a reaction vessel equipped with a stirrer, a thermometer, a reflux condenser, a tank for drop-by-drop addition, and a nitrogen gas inlet tube were charged 57 parts of P-2000 (trade name, available from ADEKA Corporation, a bifunctional polyoxypropylene glycol, having a hydroxyl number of 56.1), 247 parts of P-400 (trade name, available from ADEKA Corporation, a bifunctional polyoxypropylene glycol, having a hydroxyl number of 265.9), 57 parts of T-400 (trade name, available from Mitsui Chemicals, Inc., a trifunctional polyoxypropylene glycol, having a hydroxyl number of 404), 12 parts of dimethylol propionic acid, 207 parts of ethyl acetate, 118 parts of tolylene diisocyanate, and 0.102 parts of dibutyltin laurate, and the temperature was raised to 90°C, and the reaction was carried out until the peak for the isocyanate group disappeared in the infrared absorption spectrum. The reaction mixture was then diluted with ethyl acetate to bring the non-volatile content to 50%, to obtain a solution of a partially acid-modified polyether polyol (P-7) with a number average molecular weight of 8500 and an acid number of 10.2 mg KOH/g.

The number average molecular weights and acid numbers of the resulting polyester polyol solutions and polyether polyol solution are summarized in Table 5.

[Table 5]

|  | Production Example 1 | Production Example 2 | Production Example 3 | Production Example 4 | Production Example 5 | Production Example 6 | Production Example 7 |
|---|---|---|---|---|---|---|---|
|  | Polyester polyol | | | | | | Polyether polyol |
|  | P-1 | P-2 | P-3 | P-4 | P-5 | P-6 | P-7 |
| Number average molecular weight Mn | 2300 | 6000 | 7500 | 8000 | 9000 | 2000 | 8500 |
| Acid number (mg KOH/g) | 0.7 | 14.6 | 3.1 | 8.5 | 30.3 | 23.5 | 10.2 |

< Adjustment of polyisocyanate >

(Production Examples 8 to 12: Polyisocyanates (C-1 to C-5))

The same solutions of polyisocyanates (C-1 to C-5) as in the Second Example were obtained.

< Production of adhesive >

[Adhesives 1 to 11]

The polyol solutions obtained in the Production Examples 1 to 7 and the polyisocyanate solutions obtained in the Production Examples 8 to 12 were blended at the proportions (mass ratios) shown in Table 6, and ethyl acetate was added to prepare an adhesive solution with a non-volatile content of 30 mass%.

[Table 6]

| Table 6 | | | Adhesive | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 |
| Polyol component | Polyester polyol | P-1 | | | 20 | 20 | | | | | 20 | 20 | |
| | | P-2 | 100 | | 70 | 80 | | | | | 70 | 70 | |
| | | P-3 | | | 10 | | | | | | 10 | 10 | |
| | | P-4 | | 100 | | | | | | | | | |
| | | P-5 | | | | | 100 | 100 | 100 | 90 | | | |
| | | P-6 | | | | | | | | 10 | | | |
| | Polyether polyol | P-7 | | | | | | | | | | | 100 |
| polyisocyanate component | Aliphatic polyisocyanate | HDI derivative | C-1 | 4 | 8 | 8 | 8 | 8 | | | 8 | | | 28 |
| | | IPDI derivative | C-2 | | | | | | 8 | | | | | |
| | Aromatic-aliphatic polyisocyanate | XDI derivative | C-3 | | | | | | | 8 | | | |
| | Aromatic polyisocyanate | TDI derivative | C-4 | | | | | | | | 8 | | |
| | | MDI derivative | C-5 | | | | | | | | | 8 | |
| Acid number (mg KOH/g) of polyol | | | 14.6 | 8.5 | 10.7 | 11.8 | 30.3 | 30.3 | 30.3 | 29.6 | 10.7 | 10.7 | 10.2 |
| Acid number (mg KOH/g) of adhesive immediately after blending | | | 14.0 | 7.9 | 9.9 | 10.9 | 28.1 | 28.1 | 28.1 | 27.4 | 9.9 | 9.9 | 8.0 |

< Production of packaging material >

[Example 1: packaging material 1]

A printing ink (Rio Alpha R631 White, available from Toyo Ink Co., Ltd.) was diluted with a mixed solvent of ethyl acetate/IPA (at a mass ratio of 70/30) to a viscosity of 16 seconds (25°C, Zahn cup No. 3). The diluted printing ink was printed on a corona-treated OPP film having a thickness of 20 $\mu$m, representing a first substrate, by using a gravure proofing machine equipped with a solid printing plate with a plate depth of 35 $\mu$m, at a printing speed of 50 m/min and then dried at 50°C, to obtain a laminate of the OPP film/the printed layer. The thickness of the printed layer was set at 1 $\mu$m.

Next, the adhesive 1 was applied onto the printed layer of the resulting laminate by using a laminator, and after the solvent was evaporated, the applied surface was adhered to a 25-$\mu$m thick CPP film which had been surface-treated with corona discharge, representing a second substrate. The thickness of the polyurethane-based adhesive layer (removable adhesive layer) was set at 2 $\mu$m.

The resulting laminate was then kept at 40°C for 4 days, to obtain a packaging material 1 having the structure: the OPP film (20 $\mu$m)/the printed layer (1 $\mu$m)/the polyurethane-based adhesive layer (2 $\mu$m)/the CPP film (25 $\mu$m).

[Examples 2 to 8 and Comparative Examples 1 to 3: packaging materials 2 to 8 and 16 to 18]

Packaging materials 2 to 8 and 16 to 18 were obtained in the same manner as the packaging material 1 except that the adhesive and the printing ink were changed as shown in Table 7.

[Examples 9 to 11: packaging materials 9 to 11]

Packaging materials 9 to 11 were obtained in the same manner as the packaging material 1 except that the first substrate, the printing ink, the second substrate, the adhesive, and the thickness of the polyurethane-based adhesive layer were changed as shown in Table 7.

[Example 12: packaging material 12]

A printing ink (Rio Alpha R631 White, available from Toyo Ink Co., Ltd.) was diluted with a mixed solvent of ethyl acetate/IPA (at a mass ratio of 70/30) to a viscosity of 16 seconds (25°C, Zahn cup No. 3). The diluted printing ink was printed on the vapor-deposited layer side of a transparent vapor-deposited PET film (GL-ARH, available from Toppan Printing Co., Ltd., thickness 12 $\mu$m) by using a gravure proofing machine equipped with a solid printing plate having a plate depth of 35 $\mu$m at a printing speed of 50 m/min, and then dried at 50°C to obtain a laminate of the PET film/the vapor-deposited layer/the printed layer. The thickness of the printed layer was set at 1 $\mu$m.

The adhesive 11 was then applied onto the printed layer of the resulting laminate by using a laminator, and after the solvent was evaporated, the applied surface was adhered to an NY film having a thickness of 15 $\mu$m. The thickness of the adhesive layer was set at 3 $\mu$m.

The adhesive 8 was then applied to the NY film surface of the resulting laminate by using a laminator, and after the solvent was evaporated, the applied surface was adhered to a 70-$\mu$m thick CPP film which had been surface-treated with corona discharge. The thickness of the polyurethane-based adhesive layer was set at 3 $\mu$m.

The resulting laminate was then kept at 40°C for 4 days, to obtain a packaging material having the structure: the PET-vapor-deposited layer (12 $\mu$m)/the printed layer (1 $\mu$m)/the adhesive layer (3 $\mu$m)/the NY film (15 $\mu$m)/the polyurethane-based adhesive layer (3 $\mu$m)/the CPP film (70 $\mu$m).

[Examples 13 and 14: packaging materials 13 and 14]

Packaging materials 13 and 14 were obtained in the same manner as the packaging material 12 except that the substrate and the adhesive were changed as shown in Table 3.

[Example 15: packaging material 15]

The aqueous primer described above and a printing ink (Rio Alpha R631 White, available from Toyo Ink Co., Ltd.) were each diluted with a mixed solvent of ethyl acetate/IPA (at a mass ratio of 70/30) to a viscosity of 16 seconds (25°C, Zahn cup No. 3).

The diluted aqueous primer and the diluted printing ink were printed, in this order, on a corona-treated OPP film having a thickness of 20 $\mu$m by using a gravure proofing two-color machine equipped with a solid printing plate having a plate depth of 35 $\mu$m at a printing speed of 50 m/min, and then dried at 50°C in each unit, to obtain a laminate of the OPP film/the primer layer/the printed layer. The thicknesses of the primer layer and the printed layer were each set at 1 $\mu$m.

Next, the adhesives 1 was applied onto the printed layer of the resulting laminate by using a laminator, and after the solvent was evaporated, the applied surface was adhered to a 40-$\mu$m thick LLDPE film which had been surface-treated with corona discharge. The thickness of the polyurethane-based adhesive layer was set at 3 $\mu$m.

The resulting laminate was kept at 40°C for 4 days to obtain a packaging material having the structure: the OPP film/the primer layer/the printed layer/the polyurethane-based adhesive layer/the LLDPE film.

< Evaluation of packaging material >

Using the packaging materials obtained above, evaluations were made as described below. The results are shown in Table 7 and Table 8.

(Removability)

For each packaging material, a test piece with a size of 3.0 cm x 3.0 cm was cut out and immersed/stirred in 50 g of a 2% sodium hydroxide aqueous solution at 70°C and at a rotation speed of 100 rpm. However, for the packaging material 9, the test piece was cut out from the packaging material after boiling, and for the packaging materials 12 to 14, the test pieces were cut out from the packaging materials after retorting. The time taken for the two substrates contacting the polyurethane-based adhesive layer to detach from each other was measured, and the removability was evaluated according to the following criteria.

A: The two substrates contacting the polyurethane-based adhesive layer are completely detached from each other in less than 6 hours (good)

B: The two substrates contacting the polyurethane-based adhesive layer are completely detached from each other in 6 hours to less than 12 hours (usable)

C: The two substrates contacting the polyurethane-based adhesive layer are not completely detached from each other even after 12 hours (unusable)

(Removal rate)

For each packaging material, a test piece with a size of 3.0 cm x 3.0 cm was cut out. However, for the packaging material 9, the test piece was cut out from the packaging material after boiling, and for the packaging materials 12 to 14, the test pieces were cut out from the packaging materials after retorting. Each test piece was immersed/stirred in 50 g of a 2% sodium hydroxide aqueous solution at 70°C and at a rotation speed of 100 rpm for 12 hours. After both substrates in contact with the polyurethane-based adhesive layer were detached from each other, they were washed with water and dried, to obtain a recycled substrate of the second substrate.

The evaluation method and evaluation criteria for the resulting recycled substrate are the same as those for the packaging material 1 of the Second Example.

A: No absorption peak for the adhesive is observed at all 5 locations (the removal rate is approximately 100%: very good)

B: The absorption peak for the adhesive is observed at only 1 of the 5 locations (the removal rate is approximately 80%: good)

C: The absorption peak for the adhesive is observed at 2 or 3 of the 5 locations (the removal rate is approximately from 40 to 60%: usable)

D: The absorption peak for the adhesive is observed at 4 or more of the 5 locations (the removal rate is approximately 20%: unusable)

(Adhesive strength: initial)

A test piece with a size of 15 mm x 300 mm was produced from each packaging material and the laminate strength (N/15 mm) between the two substrates contacting the polyurethane-based adhesive layer was measured by T-type peel at a peel rate of 30 cm/min under a condition including a temperature of 20°C and a relative humidity of 65%, by using a tensile tester (EZS-200N available from SHIMADZU Corporation).

(Adhesive strength after boiling)

A pouch with a size of 21 cm x 30 cm was produced using the packaging material 9, and vacuum-filled with a sauce, as a pouch content, comprising salad oil, ketchup, and 4.2% vinegar at a mass ratio of 1:1:1. The resulting pouch was boiled at 98°C for 30 minutes.

A test piece with a size of 15 mm x 300 mm was produced from the pouch after the boiling treatment, and the laminate strength (N/15 mm) between the NY film and the LLDPE film was measured in the same manner as for the initial adhesive strength.

(Adhesive strength after retorting)

Using each of the packaging materials 12 to 14, a pouch with a size of 21 cm x 30 cm was produced, and vacuum-filled with a sauce, as a pouch content, comprising salad oil, ketchup, and 4.2% vinegar at a mass ratio of 1:1:1. The resulting pouches were retorted at 10 rpm and at 120°C for 30 minutes under an increased pressure of 3 MPa.

A test piece with a size of 15 mm x 300 mm was produced from the pouch after the retort treatment, and the laminate strength (N/15 mm) between the NY film and the CPP film or between the aluminum foil and the CPP was measured in the same manner as for the initial adhesive strength.

[Table 7]

| | | Examples | | | | | | | | | | |
|---|---|---|---|---|---|---|---|---|---|---|---|---|
| | | 1 | 2 | 3 | 4 | 5 | 6 | 7 | 8 | 9 | 10 | 11 |
| | | Packaging material 1 | Packaging material 2 | Packaging material 3 | Packaging material 4 | Packaging material 5 | Packaging material 6 | Packaging material 7 | Packaging material 8 | Packaging material 9 | Packaging material 10 | Packaging material 11 |
| First substrate | Type | OPP | OPP | OPP | OPP | OPP | OPP | OPP | OPP | ONY | PET | OPP |
| | Thickness | 20 μm | 20 μm | 20 μm | 20 μm | 20 μm | 20 μm | 20 μm | 20 μm | 15 μm | 12 μm | 20 μm |
| Primer layer | Type | - | - | - | - | - | - | - | - | - | - | - |
| Printed layer | Type | Ink 1 | Ink 1 | Ink 1 | Ink 1 | Ink 1 | Ink 1 | Ink 1 | Ink 1 | Ink 2 | Ink 3 | Ink 1 |
| | Thickness | 1 μm | 1 μm | 1 μm | 1 μm | 1 μm | 1 μm | 1 μm | 1 μm | 1 μm | 1 μm | 1 μm |
| Intermediate layer | | | | | | | | | | | | |
| Polyurethane-based adhesive layer | Type | Adhesive 1 | Adhesive 2 | Adhesive 3 | Adhesive 4 | Adhesive 5 | Adhesive 6 | Adhesive 7 | Adhesive 8 | Adhesive 8 | Adhesive 8 | Adhesive 8 |
| | Thickness | 2 μm | 2 μm | 2 μm | 2 μm | 2 μm | 2 μm | 2 μm | 2 μm | 3 μm | 3 μm | 2 μm |
| Second substrate | Type | CPP | CPP | CPP | CPP | CPP | CPP | CPP | CPP | LLDPE | LLDPE | VMCPP |
| | Thickness | 25 μm | 25 μm | 25 μm | 25 μm | 25 μm | 25 μm | 25 μm | 25 μm | 50 μm | 50 μm | 25 μm |
| Removability | Aqueous NaOH solution 70°C, 2% | B | B | A | A | A | B | A | A | A | A | A |
| Removal rate | Aqueous NaOH solution 70°C, 2% | B | B | B | B | A | B | B | A | A | A | A |
| Adhesive strength | Initial | 2.4 | 1.5 | 1.6 | 1.4 | 1.4 | 1.3 | 1.4 | 1.6 | 8.5 | 3.2 | 1.6 |
| | After boiling or retorting | | | | | | | | | After boiling 8.7 | | |

EP 3 888 908 B1

37

[Table 8]

| | | Examples | | | | Comparative Examples | | |
|---|---|---|---|---|---|---|---|---|
| | | 12 | 13 | 14 | 15 | 1 | 2 | 3 |
| | | Packaging material 12 | Packaging material 13 | Packaging material 14 | Packaging material 15 | Packaging material 16 | Packaging material 17 | Packaging material 18 |
| First substrate | Type | GL-ARH | PET | PET | OPP | OPP | OPP | OPP |
| | Thickness | 12 $\mu$m | 12 $\mu$m | 12 $\mu$m | 20 $\mu$m | 20 $\mu$m | 20 $\mu$m | 20 $\mu$m |
| Primer layer | Type | - | - | - | Aqueous primer 1 $\mu$m | - | - | - |
| Printed layer | Type | Ink 1 | Ink 1 | Ink 1 | Ink 1 | Ink 1 | Ink 2 | Ink 3 |
| | Thickness | 1 $\mu$m | 1 $\mu$m | 1 $\mu$m | 1 $\mu$m | 1 $\mu$m | 1 $\mu$m | 1 $\mu$m |
| Intermediate layer | | Adhesive 113 $\mu$m/ONY 15 $\mu$m | Adhesive 113 $\mu$m/ aluminum foil 9 $\mu$m | Adhesive 113 $\mu$m/ONY 15 $\mu$m | - | - | - | - |
| Polyurethane-based adhesive layer | Type | Adhesive 8 | Adhesive 8 | Adhesive 8 | Adhesive 8 | Adhesive 9 | Adhesive 10 | Adhesive 11 |
| | Thickness | 3 $\mu$m | 3 $\mu$m | 3 $\mu$m | 3 $\mu$m | 2 $\mu$m | 2 $\mu$m | 2 $\mu$m |
| Second substrate | Type | CPP | CPP | CPP | LLDPE | CPP | CPP | CPP |
| | Thickness | 70 $\mu$m | 70 $\mu$m | 70 $\mu$m | 40 $\mu$m | 25 $\mu$m | 25 $\mu$m | 25 $\mu$m |
| Removability | Aqueous NaOH solution 70°C, 2% | B | B | B | A | C | C | C |
| Removal rate | Aqueous NaOH solution 70°C, 2% | C | B | C | A | Unevaluable | Unevaluable | Unevaluable |
| Adhesive strength | Initial | 12 (NY/CPP) | 10 (AL/CPP) | 11 (NY/CPP) | 1.6 | 0.8 | 0.5 | 1.2 |
| | After boiling or retorting | After retorting 5.4 (NY/CPP) | After retorting 5.6 (AL/CPP) | After retorting 5.2 (NY/CPP) | | | | |

Abbreviations in Table 7 and Table 8 are shown below.

NaOH: sodium hydroxide
Ink 1: Rio Alpha R631 White, available from Toyo Ink Co., Ltd.
Ink 2: CCST 62 White, available from Toyo Ink Co., Ltd.
Ink 3: NEW MAX 63 White, available from Toyo Ink Co., Ltd.

As apparent from the results shown in Table 7 and Table 8, a packaging material having a structure in which at least the first substrate, the printed layer, the polyurethane-based adhesive layer for allowing removal of the second substrate, and the second substrate are laminated in this order from an outer layer side, wherein the polyurethane-based adhesive layer is provided in contact with the second substrate, not only excels in the initial adhesive strength and the adhesive strength after boiling or retorting, but also excels in the removability of the sealant substrate representing the second substrate, and it can thus increase the recyclability of the sealant substrate.

In particular, Examples 5, 8 to 11, and 15, in which the acid number of the adhesive after the blending was 20 mg KOH/g or higher and the polyisocyanate component was a derivative derived from hexamethylene diisocyanate, exhibited good removability and removal rate.

Further, Example 8 comprising a polyester polyol with a number average molecular weight of lower than 3000 had a superior initial adhesive strength compared to Example 5.

**Claims**

1. Use of an adhesive as a removable adhesive layer constituting a packaging material in which a substrate (1) having a plastic layer and a printed layer, the removable adhesive layer, and a sealant substrate (2) are laminated in this order from an outer side, wherein the substrate 1 can be detached so that the sealant substrate (2) is recycled, wherein the adhesive has an acid number of from 5 to 40 mg KOH/g, and comprises a polyester polyol component and at least one polyisocyanate component selected from the group consisting of aliphatic polyisocyanates and aromatic-aliphatic polyisocyanates, wherein the acid number is determined as specified in the description.

2. The use of the adhesive according to claim 1, wherein the polyester polyol component has a number average molecular weight of from 5000 to 15000, wherein the number average molecular weight is determined as specified in the description.

3. The use of the adhesive according to claim 1 or 2, wherein the polyester polyol component has an acid number of from 10 to 40 mg KOH/g, wherein the acid number is determined as specified in the description.

4. The use of the adhesive according to any one of claims 1 to 3, wherein the polyester polyol component has a urethane linkage.

5. The use of the adhesive according to any one of claims 1 to 4, wherein the polyester polyol component comprises an acid anhydride-modified product of a polyester polyurethane polyol.

6. The use of the adhesive according to any one of claims 1 to 5, wherein the polyester polyol component comprises a polyester polyol with a number average molecular weight of from 5000 to 15000 and a polyester polyol with a number average molecular weight of lower than 3000, wherein the number average molecular weight is determined as specified in the description.

7. A packaging material comprising a structure in which the substrate (1), the removable adhesive layer, and the sealant substrate (2) according to any one of claims 1 to 6 are laminated in this order from an outer side.

8. The packaging material according to claim 7, wherein the removable adhesive layer has a thickness of from 1 to 6 $\mu$m.

9. The packaging material according to claim 7 or 8, wherein the sealant substrate (2) comprises a polyolefin.

10. A packaging container comprising the packaging material according to any one of claims 7 to 9.

11. A method for producing a recycled substrate, the method comprising immersing a packaging material in a basic aqueous solution,

wherein the packaging material comprises a structure in which the substrate (1), the removable adhesive layer, and the sealant substrate (2) according to any one of claims 1 to 6 are laminated in this order from an outer side; wherein the basic aqueous solution comprises from 0.5 to 20 mass% of a basic compound relative to a total of the basic aqueous solution; and

wherein a temperature of the basic aqueous solution during the immersing is from 25 to 120°C.

**Patentansprüche**

1. Verwendung eines Klebstoffs als eine entfernbare Klebstoffschicht, die ein Verpackungsmaterial bildet, bei dem ein Substrat (1) mit einer Kunststoffschicht und einer bedruckten Schicht, die entfernbare Klebstoffschicht und ein Versiegelungssubstrat (2) in dieser Reihenfolge von einer Außenseite her laminiert sind, wobei das Substrat (1) abgelöst werden kann, so dass das Versiegelungssubstrat (2) recycelt wird, wobei der Klebstoff eine Säurezahl von 5 bis 40 mg KOH/g aufweist und eine Polyesterpolyolkomponente und mindestens eine Polyisocyanatkomponente, ausgewählt aus der Gruppe bestehend aus aliphatischen Polyisocyanaten und aromatisch-aliphatischen Polyisocyanaten, umfasst, wobei die Säurezahl wie in der Beschreibung angegeben bestimmt wird.

2. Verwendung des Klebstoffs nach Anspruch 1, wobei die Polyesterpolyolkomponente ein zahlenmittleres Molekulargewicht von 5000 bis 15000 aufweist, wobei das zahlenmittlere Molekulargewicht wie in der Beschreibung angegeben bestimmt wird.

3. Verwendung des Klebstoffs nach Anspruch 1 oder 2, wobei die Polyesterpolyolkomponente eine Säurezahl von 10 bis 40 mg KOH/g aufweist, wobei die Säurezahl wie in der Beschreibung angegeben bestimmt wird.

4. Verwendung des Klebstoffs nach einem der Ansprüche 1 bis 3, wobei die Polyesterpolyolkomponente eine Urethanbindung aufweist.

5. Verwendung des Klebstoffs nach einem der Ansprüche 1 bis 4, wobei die Polyesterpolyolkomponente ein Säureanhydrid-modifiziertes Produkt eines Polyesterpolyurethanpolyols umfasst.

6. Verwendung des Klebstoffs nach einem der Ansprüche 1 bis 5, wobei die Polyesterpolyolkomponente ein Polyesterpolyol mit einem zahlenmittleren Molekulargewicht von 5000 bis 15000 und ein Polyesterpolyol mit einem zahlenmittleren Molekulargewicht von weniger als 3000 umfasst, wobei das zahlenmittlere Molekulargewicht wie in der Beschreibung angegeben bestimmt wird.

7. Verpackungsmaterial mit einer Struktur, in der das Substrat (1), die entfernbare Klebstoffschicht und das Versiegelungssubstrat (2) nach einem der Ansprüche 1 bis 6 in dieser Reihenfolge von einer Außenseite her laminiert sind.

8. Verpackungsmaterial nach Anspruch 7, wobei die entfernbare Klebstoffschicht eine Dicke von 1 bis 6 $\mu$m aufweist.

9. Verpackungsmaterial nach Anspruch 7 oder 8, wobei das Versiegelungssubstrat (2) ein Polyolefin umfasst.

10. Verpackungsbehälter, der das Verpackungsmaterial nach einem der Ansprüche 7 bis 9 umfasst.

11. Verfahren zur Herstellung eines recycelten Substrats, wobei das Verfahren das Eintauchen eines Verpackungsmaterials in eine basische wässrige Lösung umfasst,

wobei das Verpackungsmaterial eine Struktur aufweist, in der das Substrat (1), die entfernbare Klebstoffschicht und das Versiegelungssubstrat (2) nach einem der Ansprüche 1 bis 6 in dieser Reihenfolge von einer Außenseite her laminiert sind;
wobei die basische wässrige Lösung 0,5 bis 20 Massenprozent einer basischen Verbindung, bezogen auf die gesamte basische wässrige Lösung, umfasst; und
wobei eine Temperatur der basischen wässrigen Lösung während des Eintauchens zwischen 25 und 120°C liegt.

**Revendications**

1. Utilisation d'un adhésif comme couche adhésive amovible constituant un matériau d'emballage dans lequel un substrat (1) comportant une couche plastique et une couche imprimée, la couche adhésive amovible et un substrat d'étanchéité (2) sont stratifiés dans cet ordre à partir d'un côté extérieur, le substrat pouvant être détaché de manière à ce que le substrat d'étanchéité (2) soit recyclé,
l'adhésif ayant un indice d'acide compris entre 5 et 40 mg de KOH/g, et comprenant un composant polyester-polyol et au moins un composant polyisocyanate sélectionné dans le groupe constitué par les polyisocyanates aliphatiques et les polyisocyanates aromatiques-aliphatiques, l'indice d'acide étant déterminé comme indiqué dans la description.

2. Utilisation de l'adhésif selon la revendication 1, dans laquelle le composant polyester polyol a un poids moléculaire moyen en nombre de 5000 à 15000, dans laquelle le poids moléculaire moyen en nombre est déterminé comme indiqué dans la description.

3. Utilisation de l'adhésif selon la revendication 1 ou 2, dans laquelle le composant polyester polyol a un indice d'acide de 10 à 40 mg KOH/g, l'indice d'acide étant déterminé comme indiqué dans la description.

4. Utilisation de l'adhésif selon l'une quelconque des revendications 1 à 3, dans laquelle le composant polyester polyol a une liaison uréthane.

5. Utilisation de l'adhésif selon l'une quelconque des revendications 1 à 4, dans laquelle le composant polyester polyol comprend un produit modifié par un anhydride d'acide d'un polyester polyuréthane polyol.

6. Utilisation de l'adhésif selon l'une quelconque des revendications 1 à 5, dans laquelle le composant polyester polyol comprend un polyester polyol ayant un poids moléculaire moyen en nombre compris entre 5000 et 15000 et un polyester polyol ayant un poids moléculaire moyen en nombre inférieur à 3000, le poids moléculaire moyen en nombre étant déterminé comme indiqué dans la description.

7. Matériau d'emballage comprenant une structure dans laquelle le substrat (1), la couche adhésive amovible et le substrat d'étanchéité (2) selon l'une quelconque des revendications 1 à 6 sont stratifiés dans cet ordre depuis un côté extérieur.

8. Matériau d'emballage selon la revendication 7, dans lequel la couche adhésive amovible a une épaisseur de 1 à 6 µm.

9. Matériau d'emballage selon la revendication 7 ou 8, dans lequel le substrat d'étanchéité (2) comprend une polyoléfine.

10. Contenant d'emballage comprenant le matériau d'emballage selon l'une quelconque des revendications 7 à 9.

11. Procédé de production d'un substrat recyclé, le procédé comprenant l'immersion d'un matériau d'emballage dans une solution aqueuse basique,

    dans lequel le matériau d'emballage comprend une structure dans laquelle le substrat (1), la couche adhésive amovible et le substrat d'étanchéité (2) selon l'une quelconque des revendications 1 à 6, sont stratifiés dans cet ordre depuis un côté extérieur ;
    dans lequel la solution aqueuse basique comprend de 0,5 à 20 % en masse d'un composé basique par rapport au total de la solution aqueuse basique ; et
    dans lequel la température de la solution aqueuse basique pendant l'immersion est de 25 à 120°C.

## REFERENCES CITED IN THE DESCRIPTION

**Patent documents cited in the description**

- JP H11323280 A
- JP 2017145327 A
- JP 2001131484 A
- JP H11209677 A
- JP 2001261746 A
- JP 2016037508 A
- EP 3381994 A1
- WO 2017110780 A1
- WO 2012173182 A1